(19) Europäisches Patentamt
European Patent Office
Office européen des brevets

(11) **EP 4 156 028 A1**

(12) **EUROPEAN PATENT APPLICATION**
published in accordance with Art. 153(4) EPC

(43) Date of publication:
**29.03.2023  Bulletin 2023/13**

(21) Application number: **21829643.2**

(22) Date of filing: **23.06.2021**

(51) International Patent Classification (IPC):
***G06N 3/04*** (2006.01)

(52) Cooperative Patent Classification (CPC):
**G06N 3/04; G06N 3/08**

(86) International application number:
**PCT/CN2021/101723**

(87) International publication number:
**WO 2021/259305 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2020  CN 202010588363**

(71) Applicant: **Huawei Technologies Co., Ltd.**
**Longgang District,**
**Shenzhen,**
**Guangdong 518129 (CN)**

(72) Inventors:
• **KONG, Chuili**
**Shenzhen, Guangdong 518129 (CN)**
• **ZHANG, Gongzheng**
**Shenzhen, Guangdong 518129 (CN)**
• **LI, Rong**
**Shenzhen, Guangdong 518129 (CN)**

(74) Representative: **Körber, Martin Hans**
**Mitscherlich PartmbB**
**Patent- und Rechtsanwälte**
**Sonnenstraße 33**
**80331 München (DE)**

(54) **MULTITASK LEARNING METHOD AND DEVICE**

(57)     A multi-task learning method and apparatus are provided. The method includes: inputting training data in information sources of a plurality of tasks into an encoding network for encoding, to obtain encoded training data, where the encoded training data includes characteristic information of the plurality of tasks, the characteristic information of the plurality of tasks includes private characteristic information of each task and/or common characteristic information of each task and another task, and the information sources of the plurality of tasks include an annotation result of the training data (S1301); inputting the encoded training data into a decoding network for decoding, to obtain a prediction result of the training data (S1302); adjusting a first neural network parameter of the encoding network based on the characteristic information of the plurality of tasks and a constraint (S1303); and adjusting a second neural network parameter of the decoding network based on an error between the annotation result of the training data and the prediction result of the training data (S1304). According to the foregoing method, application of multi-task learning in wireless communication is implemented.

Input training data in information sources of a plurality of tasks into an encoding network for encoding, to obtain encoded training data, where the encoded training data includes characteristic information of the plurality of tasks, the characteristic information of the plurality of tasks includes private characteristic information of each task and/or common characteristic information of each task and another task, and the information sources of the plurality of tasks include an annotation result of the training data — S1301

Input the encoded training data into a decoding network for decoding, to obtain a prediction result of the training data — S1302

Adjust a first neural network parameter of the encoding network based on the characteristic information of the plurality of tasks and a constraint — S1303

Adjust a second neural network parameter of the decoding network based on an error between the annotation result of the training data and the prediction result of the training data — S1304

FIG. 13

## Description

### CROSS-REFERENCE TO RELATED APPLICATIONS

This application claims priority to Chinese Patent Application No. 202010588363.7, filed with the China National Intellectual Property Administration on June 24, 2020 and entitled "MULTI-TASK LEARNING METHOD AND APPARATUS", which is incorporated herein by reference in its entirety.

### TECHNICAL FIELD

This application relates to the field of neural network technologies, and in particular, to a multi-task learning method and apparatus.

### BACKGROUND

An existing neural network usually learns a single task and has some limitations. For example, a neural network that has been trained for one task cannot be applied to another task, and therefore, has a poor generalization ability.

Therefore, a multi-task learning method emerges. Multi-task learning is a learning method in which a plurality of tasks promote each other and are learned in parallel by utilizing correlation between the plurality of tasks. As in-depth learning develops, combination of multi-task learning and a deep neural network has been successfully applied to fields such as natural language processing and computer vision. However, multi-task learning currently is not applied to wireless communication yet. There is no implementation solution to combining wireless communication with multi-task learning.

### SUMMARY

Embodiments of this application provide a multi-task learning method and apparatus, to implement application of multi-task learning in wireless communication and reduce communication and storage overheads.

According to a first aspect, an embodiment of this application provides a multi-task learning method. The method includes: inputting training data in information sources of a plurality of tasks into an encoding network for encoding, to obtain encoded training data, where the encoded training data includes characteristic information of the plurality of tasks, the characteristic information of the plurality of tasks includes private characteristic information of each task and/or common characteristic information of each task and another task, and the information sources of the plurality of tasks include an annotation result of the training data; inputting the encoded training data into a decoding network for decoding, to obtain a prediction result of the training data; adjusting a first neural network parameter of the encoding network based on the characteristic information of the plurality of tasks and a constraint, where the constraint is a condition that the encoding network meets when reaching a convergence state; and adjusting a second neural network parameter of the decoding network based on an error between the annotation result of the training data and the prediction result of the training data.

In this embodiment of this application, the encoding network and the decoding network are trained by using the training data in the information sources of the plurality of tasks, to implement application of multi-task learning in wireless communication. When communication or storage overheads are considered during training of the encoding network, it can be ensured that communication and storage overheads generated by communication data decrease after the trained encoding network encodes the communication data.

To implement application of multi-task learning in wireless communication, a new multi-task learning framework may be designed in this embodiment of this application, to train the encoding network and the decoding network. In addition, a new objective function/constraint may be further designed, to focus more on information related to tasks, ensure performance of the tasks, and reduce communication and storage overheads.

In a possible design, the encoding network includes an encoding network configured to extract the private characteristic information of each task, and/or an encoding network configured to extract the common characteristic information of each task and another task.

In a possible design, the decoding network includes decoding networks respectively corresponding to the plurality of tasks, and the decoding networks respectively corresponding to the plurality of tasks are configured to decode the encoded training data that corresponds to the information sources of the corresponding tasks.

In a possible design, the constraint is used to implement lossless compression of the information sources of the plurality of tasks. The constraint can ensure that the trained encoding network performs lossless compression of communication data.

In a possible design, the constraint may include that the encoding network with the first neural network parameter adjusted meets $R_0 + R_1 + R_2 = H(X,Y)$, where: $R_0$ is a bit rate of information obtained after a first encoding network with the first neural network parameter adjusted encodes an information source of a first task and an information source of a second task; $R_1$ is a bit rate of information obtained after a second encoding network with the first neural network parameter adjusted encodes the information source of the first task; $R_2$ is a bit rate of information obtained after a third encoding network with the first neural network parameter adjusted encodes the information source of the second task; $H(X,Y)$ is entropy of the information source of the first task and the information source of the second task; the first encoding network is an encoding network configured to extract common characteristic information of the first task and the second task; the second encoding network is an encoding network configured to extract private characteristic information of the first task; and the third encoding network is an encoding network configured to extract private characteristic information of the second task.

In a possible design, the constraint may include at least one of the following cases:

the encoding network with the first neural network parameter adjusted meets $R_0 = H(X,Y)$ and $R_1 = R_2 = 0$; or
the encoding network with the first neural network parameter adjusted meets $R_0 = 0$, $R_1 = H(X)$, and $R_2 = H(Y)$; or
the encoding network with the first neural network parameter adjusted meets $R_0 = H(Y)$, $R_1 = H(X|Y)$, and $R_2 = 0$; or
the encoding network with the first neural network parameter adjusted meets $R_0 = H(X)$, $R_1 = 0$, and $R_2 = H(Y|X)$; or
the encoding network with the first neural network parameter adjusted meets $R_0 = I(X;Y)$, $R_1 = H(X|Y)$, and $R_2 = H(Y|X)$, where
$R_0$ is a bit rate of information obtained after a first encoding network with the first neural network parameter adjusted encodes an information source of a first task and an information source of a second task; $R_1$ is a bit rate of information obtained after a second encoding network with the first neural network parameter adjusted encodes the information source of the first task; $R_2$ is a bit rate of information obtained after a third encoding network with the first neural network parameter adjusted encodes the information source of the second task; and $H(X,Y)$ is entropy of the information source of the first task and the information source of the second task; $H(X)$ is entropy of the information source of the first task, $H(Y)$ is entropy of the information source of the second task, $H(X|Y)$ is entropy of the information source of the first task when the information source of the second task is determined, $H(Y|X)$ is entropy of the information source of the second task when the information source of the first task is determined, and $I(X;Y)$ is mutual information between the information source of the first task and the information source of the second task; and
the first encoding network is an encoding network configured to extract common characteristic information of the first task and the second task, the second encoding network is an encoding network configured to extract private characteristic information of the first task, and the third encoding network is an encoding network configured to extract private characteristic information of the second task.

In a possible design, the constraint is used to implement lossy compression of the information sources of the plurality of tasks. The constraint can ensure that the trained encoding network performs lossy compression of communication data.

In a possible design, the constraint may include that the encoding network with the first neural network parameter adjusted meets $R_0 + R_1 + R_2 = H(X, Y)$, and a distortion metric of a second encoding network with the first neural network parameter adjusted and a distortion metric of a third encoding network with the first neural network parameter adjusted reach a minimum distortion metric value, where: the minimum distortion metric value is a distortion metric value obtained when the second encoding network with the first neural network parameter adjusted and the third encoding network with the first neural network parameter adjusted reach a convergence state; $R_0$ is a bit rate of information obtained after a first encoding network with the first neural network parameter adjusted encodes an information source of a first task and an information source of a second task; $R_1$ is a bit rate of information obtained after the first encoding network with the first neural network parameter adjusted encodes the information source of the first task; $R_2$ is a bit rate of information obtained after the second encoding network with the first neural network parameter adjusted encodes the information source of the second task; and $H(X,Y)$ is entropy of the information source of the first task and the information source of the second task; and the first encoding network is an encoding network configured to extract common characteristic information of the first task and the second task, the second encoding network is an encoding network configured to extract private characteristic information of the first task, and the third encoding network is an encoding network configured to extract private characteristic information of the second task.

In a possible design, the constraint may include: the decoding network with a neural network parameter adjusted meets that $I(Y1, Y2; U)$ reaches a maximum value, and/or the encoding network with a neural network parameter adjusted meets that $I(X1,X2; U)$ reaches a minimum value, where

Y1 is an annotation result of training data in an information source of a first task, Y2 is an annotation result of training data in an information source of a second task, U is encoded training data, and the encoded training data includes private characteristic information of the first task, private characteristic information of the second task, and common characteristic information of the first task and the second task;
the maximum value is a value of mutual information between the annotation result of the training data in the information sources of the plurality of tasks and the encoded training data obtained when the encoding network with the first neural network parameter adjusted reaches a convergence state, and herein, the value of the mutual information is expressed based on I; and

X1 is the training data in the information source of the first task, X2 is the training data in the information source of the second task, the minimum value is a value of mutual information between the training data in the information sources of the plurality of tasks and the encoded training data obtained when the encoding network with the first neural network parameter adjusted reaches a convergence state, and herein, the value of the mutual information is expressed based on I.

According to a second aspect, an embodiment of this application provides a multi-task learning apparatus. The apparatus may have functions of implementing any one of the first aspect or the possible designs of the first aspect. The functions of the multi-task learning apparatus may be implemented by hardware, or may be implemented by hardware executing corresponding software. The hardware or software includes one or more modules corresponding to the foregoing functions.

For example, the apparatus may include an encoding unit, a decoding unit, and an adjusting unit. The encoding unit is configured to input training data in information sources of a plurality of tasks into an encoding network for encoding, to obtain encoded training data, where the encoded training data includes characteristic information of the plurality of tasks, the characteristic information of the plurality of tasks includes private characteristic information of each task and/or common characteristic information of each task and another task, and the information sources of the plurality of tasks include an annotation result of the training data. The decoding unit is configured to input the encoded training data into a decoding network for decoding, to obtain a prediction result of the training data. The adjusting unit is configured to: adjust a first neural network parameter of the encoding network based on the characteristic information of the plurality of tasks and a constraint, where the constraint is a condition that the encoding network meets when reaching a convergence state; and adjust a second neural network parameter of the decoding network based on an error between the annotation result of the training data and the prediction result of the training data.

In a possible design, the encoding network may include an encoding network configured to extract the private characteristic information of each task, and/or an encoding network configured to extract the common characteristic information of each task and another task.

In a possible design, the decoding network includes decoding networks respectively corresponding to the plurality of tasks, and the decoding networks respectively corresponding to the plurality of tasks are configured to decode the encoded training data that corresponds to the information sources of the corresponding tasks.

In a possible design, the constraint is used to implement lossless compression of the information sources of the plurality of tasks.

In a possible design, the constraint may include that the encoding network with the first neural network parameter adjusted meets $R_0 + R_1 + R_2 = H(X,Y)$, where: $R_0$ is a bit rate of information obtained after a first encoding network with the first neural network parameter adjusted encodes an information source of a first task and an information source of a second task; $R_1$ is a bit rate of information obtained after a second encoding network with the first neural network parameter adjusted encodes the information source of the first task; $R_2$ is a bit rate of information obtained after a third encoding network with the first neural network parameter adjusted encodes the information source of the second task; and $H(X,Y)$ is entropy of the information source of the first task and the information source of the second task; and

the first encoding network is an encoding network configured to extract common characteristic information of the first task and the second task; the second encoding network is an encoding network configured to extract private characteristic information of the first task; and the third encoding network is an encoding network configured to extract private characteristic information of the second task.

In a possible design, the constraint may include at least one of the following cases:

the encoding network with the first neural network parameter adjusted meets $R_0 = H(X,Y)$ and $R_1 = R_2 = 0$; or
the encoding network with the first neural network parameter adjusted meets $R_0 = 0$, $R_1 = H(X)$, and $R_2 = H(Y)$; or
the encoding network with the first neural network parameter adjusted meets $R_0 = H(Y)$, $R_1 = H(X|Y)$, and $R_2 = 0$; or
the encoding network with the first neural network parameter adjusted meets $R_0 = H(X)$, $R_1 = 0$, and $R_2 = H(Y|X)$; or
the encoding network with the first neural network parameter adjusted meets $R_0 = I(X;Y)$, $R_1 = H(X|Y)$, and $R_2 = H(Y|X)$, where
$R_0$ is a bit rate of information obtained after a first encoding network with the first neural network parameter adjusted encodes an information source of a first task and an information source of a second task; $R_1$ is a bit rate of information obtained after a second encoding network with the first neural network parameter adjusted encodes the information source of the first task; $R_2$ is a bit rate of information obtained after a third encoding network with the first neural network parameter adjusted encodes the information source of the second task; and $H(X,Y)$ is entropy of the information source of the first task and the information source of the second task;
$H(X)$ is entropy of the information source of the first task, $H(Y)$ is entropy of the information source of the second task, $H(X|Y)$ is entropy of the information source of the first task when the information source of the second task is determined, H(Y|X) is entropy of the information source of the second task when the information source of the first task is determined, and I(X;Y) is mutual information between the information source of the first task and the information source of the second task; and

the first encoding network is an encoding network configured to extract common characteristic information of the first task and the second task, the second encoding network is an encoding network configured to extract private characteristic information of the first task, and the third encoding network is an encoding network configured to extract private characteristic information of the second task.

In a possible design, the constraint is used to implement lossy compression of the information sources of the plurality of tasks.

In a possible design, the constraint may include that the encoding network with the first neural network parameter adjusted meets $R_0 + R_1 + R_2 = H(X,Y)$, and a distortion metric of a second encoding network with the first neural network parameter adjusted and a distortion metric of a third encoding network with the first neural network parameter adjusted reach a minimum distortion metric value, where the minimum distortion metric value is a distortion metric value obtained when the second encoding network with the first neural network parameter adjusted and the third encoding network with the first neural network parameter adjusted reach a convergence state;

$R_0$ is a bit rate of information obtained after a first encoding network with the first neural network parameter adjusted encodes an information source of a first task and an information source of a second task; $R_1$ is a bit rate of information obtained after the first encoding network with the first neural network parameter adjusted encodes the information source of the first task; $R_2$ is a bit rate of information obtained after the second encoding network with the first neural network parameter adjusted encodes the information source of the second task; and H(X, Y) is entropy of the information source of the first task and the information source of the second task; and

the first encoding network is an encoding network configured to extract common characteristic information of the first task and the second task, the second encoding network is an encoding network configured to extract private characteristic information of the first task, and the third encoding network is an encoding network configured to extract private characteristic information of the second task.

In a possible design, the constraint may include: the decoding network with a neural network parameter adjusted meets that I(Y1, Y2; U) reaches a maximum value, and/or the encoding network with a neural network parameter adjusted meets that I(X1,X2; U) reaches a minimum value, where

Y1 is an annotation result of training data in an information source of a first task, Y2 is an annotation result of training data in an information source of a second task, U is encoded training data, and the encoded training data includes private characteristic information of the first task, private characteristic information of the second task, and common characteristic information of the first task and the second task;

the maximum value is a value of mutual information between the annotation result of the training data in the information sources of the plurality of tasks and the encoded training data obtained when the encoding network with the first neural network parameter adjusted reaches a convergence state, and herein, I is used to represent the value of the mutual information; and

X1 is the training data in the information source of the first task, X2 is the training data in the information source of the second task, the minimum value is a value of mutual information between the training data in the information sources of the plurality of tasks and the encoded training data obtained when the encoding network with the first neural network parameter adjusted reaches a convergence state, and herein, I is used to represent the value of the mutual information.

According to a third aspect, an embodiment of this application provides a multi-task learning apparatus. The apparatus may have functions of implementing any one of the first aspect or the possible designs of the first aspect. The functions of the multi-task learning apparatus may be implemented by hardware, or may be implemented by hardware executing corresponding software. The hardware or software includes one or more modules corresponding to the foregoing functions.

A structure of the apparatus includes at least one processor and may further include at least one memory. The at least one processor is coupled to the at least one memory, and may be configured to execute computer program instructions stored in the memory, to enable the apparatus to perform the method in any one of the first aspect or the possible designs of the first aspect. Optionally, the apparatus further includes a communication interface, and the processor is coupled to the communication interface. When the apparatus is a server, the communication interface may be a transceiver or an input/output interface. When the apparatus is a chip included in a server, the communication interface may be an input/output interface of the chip. Optionally, the transceiver may be a transceiver circuit, and the input/output interface may be an input/output circuit.

According to a fourth aspect, an embodiment of this application provides a chip system, including a processor. The processor is coupled to a memory. The memory is configured to store a program or instructions. When the program or instructions are executed by the processor, the chip system is enabled to implement the method in any one of the first aspect or the possible designs of the first aspect.

Optionally, the chip system further includes an interface circuit. The interface circuit is configured to receive code instructions and transmit the code instructions to the processor.

Optionally, there may be one or more processors in the chip system. The processor may be implemented by hardware or software. When the processor is implemented by the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a fifth aspect, an embodiment of this application provides a multi-task learning apparatus, including a processor and an interface circuit. The interface circuit is configured to receive code instructions and transmit the code instructions to the processor. The processor is configured to run the code instructions to perform the method in any one of the first aspect or the possible designs of the first aspect.

According to a sixth aspect, an embodiment of this application provides a readable storage medium. The readable storage medium stores a computer program or instructions. When the computer program or instructions are executed, a computer is enabled to perform the method in any one of the first aspect or the possible designs of the first aspect.

According to a seventh aspect, an embodiment of this application provides a computer program product. When a computer reads and executes the computer program product, the computer is enabled to perform the method in any one of the first aspect or the possible designs of the first aspect.

For technical effects that can be achieved by any one of the second aspect to the seventh aspect and any one of the possible designs in any aspect, refer to descriptions of technical effects that can be brought by the first aspect and a corresponding design in the first aspect. Details are not described herein again.

## BRIEF DESCRIPTION OF DRAWINGS

FIG. 1 is a schematic diagram of an architecture of a fully connected neural network;
FIG. 2 is a schematic diagram of optimization of a loss function;
FIG. 3 is a schematic diagram of gradient back propagation;
FIG. 4 is a schematic diagram of a neural network architecture;
FIG. 5 is a schematic diagram of a wireless communication system architecture according to an embodiment of this application;
FIG. 6 is a schematic flowchart of information source compression according to an embodiment of this application;
FIG. 7 is a schematic diagram of a neural network architecture according to an embodiment of this application;
FIG. 8 is a schematic diagram of a neural network architecture according to an embodiment of this application;
FIG. 9 is a schematic diagram of a neural network architecture according to an embodiment of this application;
FIG. 10 is a schematic diagram of a neural network architecture according to an embodiment of this application;
FIG. 11 is a schematic diagram of a neural network architecture according to an embodiment of this application;
FIG. 12 is a schematic diagram of a neural network architecture according to an embodiment of this application;
FIG. 13 is a schematic flowchart of multi-task learning according to an embodiment of this application;
FIG. 14 is a schematic diagram of a structure of a multi-task learning apparatus according to an embodiment of this application; and
FIG. 15 is a schematic diagram of another structure of a multi-task learning apparatus according to an embodiment of this application.

## DESCRIPTION OF EMBODIMENTS

This application provides a multi-task learning method and apparatus, intended to implement application of multi-task learning in wireless communication. A constraint/an objective function of a plurality of tasks is designed, to focus more on performance of each task and information related to each task, and reduce communication and storage overheads. The method and the apparatus are based on a same technical concept. Because the method and the apparatus have a similar problem-resolving principle, for implementations of the apparatus and the method, refer to each other, and no repeated description is provided.

The following describes some terms in embodiments of this application, to facilitate understanding of a person skilled in the art.

(1) Multi-task learning: Multi-task learning is a learning method in which a plurality of tasks promote each other and are learned in parallel by utilizing correlation between the plurality of tasks. That is, multi-task learning can enable the plurality of tasks to affect each other by simultaneously training the plurality of tasks. Generally, a generalization ability of multi-task learning is better than a generalization ability of single-task learning. The correlation between the plurality of tasks may be alternatively understood as a common characteristic/shared characteristic between the plurality of tasks.

Multi-task learning is learning a plurality of pieces of supervisory information (label (label)) provided by data. For example, recognizing whether a face in an image is a human face, recognizing a facial expression, recognizing a gender, recognizing an age, and the like belong to a multi-task class. For another example, recognizing a cat and a dog in an image and the like also belongs to the multi-task class.

Multi-label learning (Multi-label learning) is a type of multi-task learning. Correlation between a plurality of labels is modeled, and the plurality of labels are also modeled. A plurality of classes share a same characteristic. Multiclass learning (Multiclass learning) is a type of a multi-label learning task. A plurality of classes (classes) that are independent of each other are modeled.

Multi-task learning may be used to improve an effect or performance in a plurality of application fields such as spam filtering, web page retrieval, natural language processing, image recognition, speech recognition, and wireless communication.

A performance gain of multi-task learning comes from a plurality of aspects. For example, (a) multi-task is equivalent to expanding a data set of each task; (b) a process of multi-task learning may be considered as introducing an eavesdropping mechanism in a model, for example, a task A being capable of learning some characteristics by using a task B; and (c) multi-task learning has a stronger generalization ability.

In embodiments of this application, an example is mainly used for description in which the plurality of tasks include a first task and a second task.

(2) Objective function: An objective function is used to find an optimal solution. To obtain a neural network parameter (which is referred to as a parameter for short in embodiments of this application) used for training a logistic regression model, an objective function may be trained. As a function that needs to be optimized finally, an objective function includes an empirical loss and a structural loss. The empirical loss may be understood as a loss function or a cost function. The structural loss may be understood as a function used to control complexity of a model, such as a regularization term. In other words, the objective function may be a "loss function" or a "loss function + regularization term".

Performance of a plurality of tasks can be simultaneously improved by designing an objective function. Therefore, designing an objective function is quite important in multi-task learning. Multi-task learning with I tasks is used as an example. In a conventional manner, an objective function is usually designed as $\mathcal{L} = \sum_{i=1}^{N} \alpha_i \mathcal{L}_i + \mathcal{R}$, where $\mathcal{L}_i$ is an objective function of an $i^{th}$ task, i is an integer greater than 0 and not greater than I, and $\mathcal{R}$ is a regularization term. The regularization term may be specifically designed as a second-order norm of a network weight matrix, or the like. The parameter $\alpha_i$ represents a weight and is used to balance importance of different tasks. Usually, a value is assigned to $\alpha_i$ directly based on priori knowledge. However, it is quite difficult to obtain the priori knowledge. A user may learn of data to be input into a neural network and related tasks of training, but the data and the tasks cannot determine importance of different tasks. Even though the importance of the different tasks can be ranked, the importance still cannot be quantized to determine a value of $\alpha_i$. In addition, application of multi-task learning in wireless communication is not considered when an objective function is designed in the conventional manner. A plurality of objective functions are designed in embodiments of this application, to meet application of multi-task learning in wireless communication. For details, refer to subsequent embodiments.

The objective function may be combined with a constraint to train a neural network. The constraint is a condition that a neural network needs to meet when reaching a convergence state. The objective function and the constraint are both used to limit a training process of a neural network. Therefore, in embodiments of this application, the objective function may be understood as equivalent to the constraint.

(3) Loss function: A loss function (loss function), also referred to as a cost function or an error function, is used to estimate a degree of inconsistency between a predicted value of a model (that is, a prediction result output during training of the model) and an actual value of the model (that is, an annotation result of training data). Generally, a smaller output value of a loss function indicates better performance of a model (for example, an image processing model, a classification model, or a recognition model).

(4) Neural network (neural networks, NN): A model is usually based on a neural network architecture. Neural networks include a feedforward neural network (feedforward neural network, FNN), a convolutional neural network (convolutional neural networks, CNN), a recurrent neural network (recurrent neural networks, RNN), an auto encoder (auto encoder, AE), a generative adversarial network (generative adversarial networks, GAN), and the like.

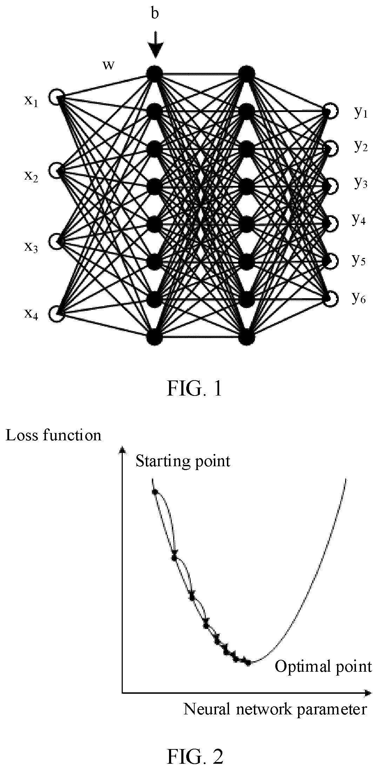

A fully connected neural network is used as an example for description. The fully connected neural network is also referred to as a multilayer perceptron (multilayer perceptron, MLP). One MLP includes an input layer, an output layer, and a hidden layer. There may be one or more input layers, one or more output layers, and one or more hidden layers. Each (neural network) layer includes a plurality of neurons. As shown in FIG. 1, an MLP includes one input layer (including neurons x1, x2, x3, and x4), a plurality of hidden layers (a middle part shown in FIG. 1), and one output layer (including neurons y1, y2, y3, y4, y5, and y6). Each neuron at a layer is connected to each neuron at a layer adjacent to the layer.

For neurons at two adjacent layers, an output h of a next-layer neuron meets: h = f(wx + b), where f is an activation function, w is a weight matrix or a weight value, b is a bias vector or a bias value, and x is a previous-layer neuron connected to the next-layer neuron. Usually, the output h of the next-layer neuron is obtained by summing up weighted outputs of all previous-layer neurons x connected to the next-layer neuron and applying the activation function to a weighted result.

An output of a neural network may be recursively expressed as $y = f_n (w_n f_{n-1} (...) + b_n)$, where n is a number of a currently calculated neural network layer, and y is an output of the currently calculated neural network layer.

In conclusion, briefly, a neural network may be understood as a mapping relationship from an input data set to an output data set. A process of obtaining the mapping relationship based on (randomly initialized) w and b and training data may be referred to as a training (or learning) process of the neural network.

A process of optimizing a loss function (or a neural network parameter in a loss function) in a training process is shown in FIG. 2. A lateral axis is a value of a neural network parameter (for example, w and/or b). A longitudinal axis is an output value of the loss function. A curve is a mapping relationship between the neural network parameter and the loss function. Usually, an initial neural network parameter (for example, a starting point shown in FIG. 2) is set, and training is performed based on the initial neural network parameter. In a training process, the loss function is used to calculate an error between an output result (or a prediction result) of a neural network and an annotation result of training data. That is, the loss function is used to evaluate the output result of the neural network. In addition, the error is back propagated. The neural network parameter is iteratively optimized by using a gradient descent method until the output value of the loss function reaches a minimum value. In this case, an optimal point is reached.

A gradient descent process may be expressed as: $\theta \leftarrow \theta - \eta \frac{\partial L}{\partial \theta}$, where $\theta$ is a neural network parameter (for example, w and/or b) to be optimized, L is a loss function, and $\eta$ is a learning rate, which is used to control a gradient descent step.

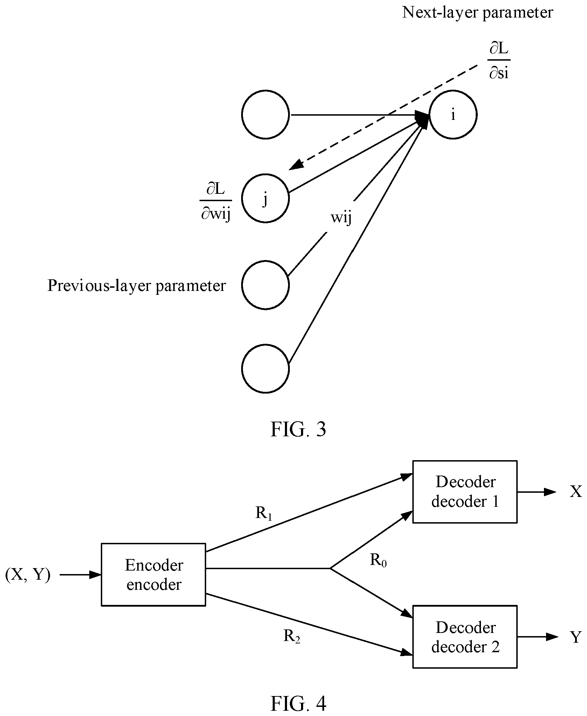

A back propagation process can be implemented by using a chain rule for partial derivatives. That is, a gradient of a previous-layer parameter can be obtained through recursive calculation based on a gradient of a next-layer parameter. As shown in FIG. 3, a next-layer parameter is $\frac{\partial L}{\partial s_i}$, and a previous-layer parameter is $\frac{\partial L}{\partial w_{ij}}$. Therefore, a formula may be expressed as: $\frac{\partial L}{\partial w_{ij}} = \frac{\partial L}{\partial s_i} \frac{\partial s_i}{\partial w_{ij}}$, where $w_{ij}$ is a weight of a node j connecting to a node i, and $s_i$ is a weighted sum of inputs of the node i.

(5) Information source: An information source is also referred to as a source of information, that is, a producer or publisher of information. In a multi-task learning process, different tasks may correspond to different information sources. Data of different information sources has private characteristics, and data of one information source and data of another information source may have a common characteristic.

(6) Encoding network and decoding network: An encoding network is also referred to as an encoder (encoder), and a decoding network is also referred to as a decoder (decoder). To implement application of multi-task learning in wireless communication, at least one encoder and at least one decoder are disposed in a network architecture in embodiments of this application. In a wireless communication process, the encoder and the decoder may be located in different devices.

The encoder is configured to compress and encode data of an information source, and may further filter out redundant information of the information source. The decoder is configured to restore and reconstruct data of an information source. A trained encoder can compress data of an information source as much as possible, to reduce communication overheads or storage overheads. A trained decoder can restore data of an information source as much as possible.

Compression of data of an information source may be classified into lossless compression and lossy compression based on whether a distortion metric is present. In a point-to-point communication system, usually, data of an information source is compressed at a point A, transmitted to a point B through a channel, and restored at the point B. For example, as shown in FIG. 4, an information source X, an information source Y, one encoder, and two decoders are included. A range of bit rates that lossless compression can reach is $(R_0, R_1, R_2)$, and a range of bit rates that lossy compression can reach is $(R_0, R_1, R_2, D_1, D_2)$. $R_0$, $R_1$, and $R_2$ are bit rates of information obtained after encoders perform encoding, respectively. $D_1$ and $D_2$ are distortion metrics of a decoder 1 and a decoder 2.

A compression limit of lossless compression is a minimum statistical amount of data of an information source, or may be considered as entropy of the information source. A compression limit of lossy compression is related to an information rate distortion function. If a specific task is concerned, a compression limit is determined by a task and a structure of an information source. For example, if a task is recognizing a dog, content irrelevant to a dog in an image may all be removed. In other words, factors that need to be considered in task-based encoding are more complex, and there may be a larger amount of information that can be extracted.

(7) Entropy: Entropy, also referred to as information entropy, is a metric of uncertainty of an event. An event includes a plurality of possible situations, each with its own uncertainty. Information may be used to eliminate uncertainty of an event. Generally, for an event, a larger amount of information obtained about the event indicates lower uncertainty of the event.

Mutual information is a metric measuring mutual dependence between random variables. A value of the mutual information may be expressed based on I. For example, there is one random variable X and another random variable Y. Their mutual information may be expressed as $I(X;Y) = H(X) - H(X|Y)$, where $H(X)$ is entropy of X, and $H(X|Y)$ is entropy of Y when X is known.

(8) Training data and test data: Training data is used to train a neural network. In embodiments of this application, the training data is also referred to as sample data. Test data is used to verify accuracy of a neural network. Optionally, the training data and the test data are both annotated with a result.

In a training process of a neural network, all or some of training data may be used for training. Training by using all of the training data may be referred to as epoch (epoch) training. Training by using some of the training data may be referred to as batch (batch) training. For example, all of the training data may be divided into a plurality of parts in advance. One part of the training data is referred to as one batch of data.

In embodiments of this application, epoch training is mainly used as an example to describe a multi-task learning process. A multi-task learning process of batch training is similar to the multi-task learning process of epoch training, and therefore, is not described in detail.

(9) Electronic device: An electronic device, also referred to as a device or a node, includes a terminal device and a network device.

The terminal device includes a device providing voice and/or data connectivity to a user. Specifically, the terminal device includes a device providing voice to a user, or includes a device providing data connectivity to a user, or includes a device providing voice and data connectivity to a user. For example, the terminal device may include a handheld device with a wireless connectivity function or a processing device connected to a wireless modem. The terminal device may communicate with a core network by using a radio access network (radio access network, RAN), exchange voice or data with the RAN, or exchange voice and data with the RAN. The terminal device may include user equipment (user equipment, UE), a wireless terminal device, a mobile terminal device, a device-to-device communication (device-to-device, D2D) terminal device, a vehicle to everything (vehicle to everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus, or the like. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device alternatively includes a limited device, for example, a device having low power consumption, a device having a limited storage capability, or a device having a limited computing capability. For example, the terminal device includes an information sensing device such as a barcode, a radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not merely a hardware device, but is used to implement a powerful function through software support, data interaction, and cloud interaction. In a board sense, wearable intelligent devices include full-featured and large-sized devices that can implement complete or partial functions without depending on smartphones, for example, smart watches or smart glasses, and devices that focus on only one type of application function and need to work with other devices such as smartphones, such as various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In embodiments of this application, the terminal device may further include a speaker, an image acquisition device (for example, a camera), and the like.

In embodiments of this application, the terminal device may further include a relay (relay). Alternatively, it is understood as that any device that can perform data communication with a base station may be considered as a terminal device.

In embodiments of this application, an apparatus configured to implement a function of the terminal device may be a terminal device, or may be an apparatus that can support the terminal device in implementing the function, for example, a chip system. The apparatus may be installed in the terminal device. In this embodiment of this application, the chip system may include a chip, or may include a chip and another discrete component. In technical solutions provided in embodiments of this application, that an apparatus configured to implement a function of the terminal is a terminal device is used as an example to describe the technical solutions provided in embodiments of this application.

The network device, including, for example, an access network (access network, AN) device, for example, a base station (for example, an access point), may be a device that is in an access network and that communicates with a wireless terminal device at an air interface through one or more cells. Alternatively, for example, a network device in a vehicle-to-everything (vehicle-to-everything, V2X) technology is a road side unit (road side unit, RSU). The base station may be configured to mutually convert a received over-the-air frame and an IP packet and serve as a router between the terminal device and a rest portion of the access network, where the rest portion of the access network may include an IP network. The RSU may be a fixed infrastructure entity supporting a V2X application, and may exchange a message with another entity supporting the V2X application. The network device may further coordinate attribute management of the air interface. In systems using different radio access technologies, devices with functions of a base station may have different names. For example, the network device may include an evolved NodeB (NodeB or eNB or e-NodeB, evolutional NodeB) in a long term evolution (long term evolution, LTE) system or a long term evolution-advanced (long term evolution-advanced, LTE-A) system, or may include a next generation NodeB (next generation NodeB, gNB) in a 5th generation (the 5th generation, 5G) mobile communication technology NR system (also referred to as an NR system for short), or may include a centralized unit (centralized unit, CU) and a distributed unit (distributed unit, DU) in a cloud access network (cloud radio access network, Cloud RAN) system. This is not limited in embodiments of this application.

The network device may further include a core network (core network, CN) device. The core network device includes, for example, an access and mobility management function (access and mobility management function, AMF).

The term "and/or" describes an association relationship for describing associated objects and represents that three relationships may exist. For example, A and/or B may represent the following three cases: Only A exists, both A and B exist, and only B exists. The character "/" usually indicates an "or" relationship between associated objects.

"A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence.

The technical solutions in embodiments of this application may be applied to various communication systems, including a conventional communication system and a system with a conventional communication system and a satellite communication system converged. The conventional communication system includes but is not limited to: a narrow band-internet of things (narrow band-internet of things, NB-IoT) system, a global system for mobile communication (global system for mobile communication, GSM), an enhanced data rate for GSM evolution (enhanced data rate for GSM evolution, EDGE for short) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) system, three application scenarios eMBB, URLLC, and eMTC of a next generation 5G mobile communication system, and a future 6th generation communication system.

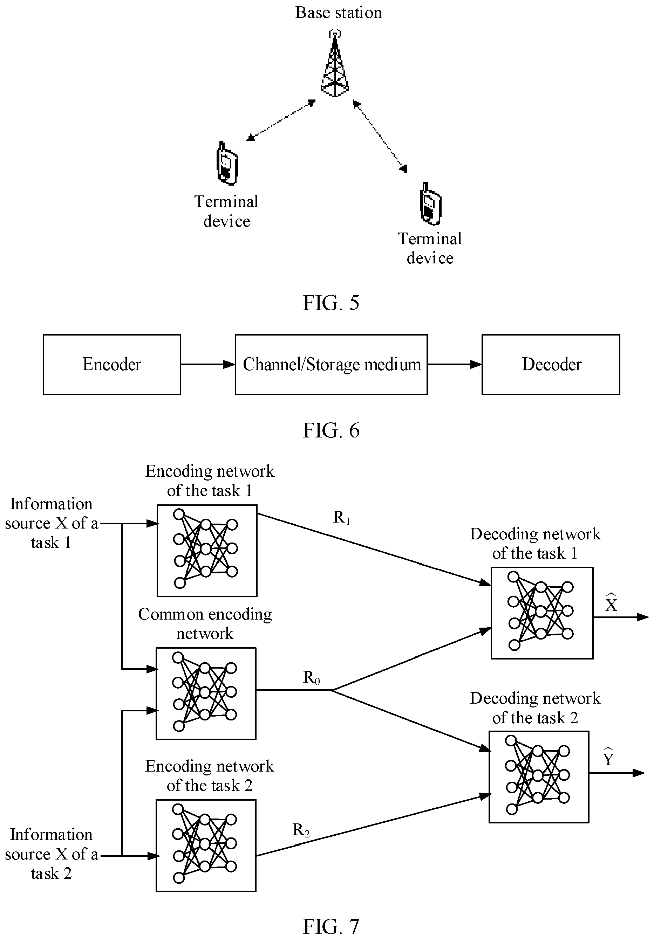

For ease of understanding of embodiments of this application, a wireless communication system architecture shown in FIG. 5 is used as an example to describe an application scenario used in this application. A communication network architecture shown in FIG. 5 may include a terminal device part and a network device part (for example, a base station shown in FIG. 5). A terminal device and a network device may both encode an information source. A process of encoding an information source includes compressing the information source and extracting information related to a task. A trained encoding network and a trained decoding network may be configured in both the terminal device and the network device.

A wireless communication system generally includes cells. Each cell includes a base station (base station, BS). The base station provides a communication service to a plurality of mobile stations (mobile station, MS). The base station may include a baseband unit (baseband unit, BBU) and a remote radio unit (remote radio unit, RRU). The BBU and the RRU may be placed at different locations, or the BBU and the RRU may be placed in a same equipment room, or the BBU and the RRU may be different parts in a rack. When the BBU and the RRU are placed at different locations, the BBU may be placed in a central equipment room, and the RRU may be placed in an area with heavy traffic.

Embodiments of this application are applicable to an information source processing scenario, including but not limited to an information source processing scenario in a wireless communication process. A schematic flowchart of information source compression is shown in FIG. 6. An input of an encoder is an information source. The information source may be, for example, data collected by a sensor, a video collected by a surveillance camera, or data of another information source. After encoding information source data, the encoder transmits the encoded information source data to a decoder through a channel, or uses a storage device (for example, a hard disk) to store the encoded information source data. The information source data is data of an information source of a task.

To implement application of multi-task learning in wireless communication, an embodiment of this application further provides a neural network architecture. The neural network architecture includes an information source of a task (also referred to as an information source in this embodiment of this application), an encoder, and a decoder. There may be one or more information sources, one or more encoders, and one or more decoders. Usually, a quantity of the information sources is less than or equal to a quantity of the tasks. For example, the quantity of the information sources is equal to the quantity of the tasks. The encoder may include an encoder configured to extract common characteristic information of the information sources, and/or an encoder configured to extract private characteristic information of the information sources. A quantity of the decoders may be the same as the quantity of the information sources. The decoder may restore received encoded data of the information sources and output the restored data. For example, as shown in FIG. 7, a neural network architecture includes two information sources (an information source X of a task 1 and an information source Y of a task 2), three encoders (including an encoder for the task 1, an encoder for the task 2, and a common encoder), and two decoders (including a decoder for the task 1 and a decoder for the task 2). The encoder for the task 1 is configured to extract private characteristic information of X, the encoder for the task 2 is configured to extract private characteristic information of Y, and the common encoder is configured to extract common characteristic information of X and Y The decoder for the task 1 is configured to restore/decode the information source X, and the decoder for the task 2 is configured to restore/decode the information source Y In this embodiment of this application, an encoding network and a decoding network are trained by using training data in the information sources of the plurality of tasks, to implement application of multi-task learning in wireless communication. When communication or storage overheads are considered during training of the encoding network, it can be ensured that communication and storage overheads generated by communication data decrease after the trained encoding network encodes the communication data.

Based on the foregoing application scenario, this application provides a multi-task learning method and apparatus. A new multi-task learning framework is designed to train an encoder and a decoder, to implement application of multi-task learning in wireless communication. In this method, a new objective function/constraint of multi-task learning is designed, only information related to a task is retained, and other redundant information is discarded, thereby focusing more on performance of the task and the information related to the task and reducing communication and storage overheads.

The following further describes in detail embodiments of this application with reference to the accompanying drawings. In embodiments of this application, two information sources (an information source X of a task 1 and an information source Y of a task 2), one or more encoders, and two decoders (a decoder for the task 1 and a decoder for the task 2) are used as an example for description. Certainly, in actual application, a quantity of information sources, a quantity of encoders, and a quantity of decoders may all be set depending on a requirement. This is not limited herein in this application.

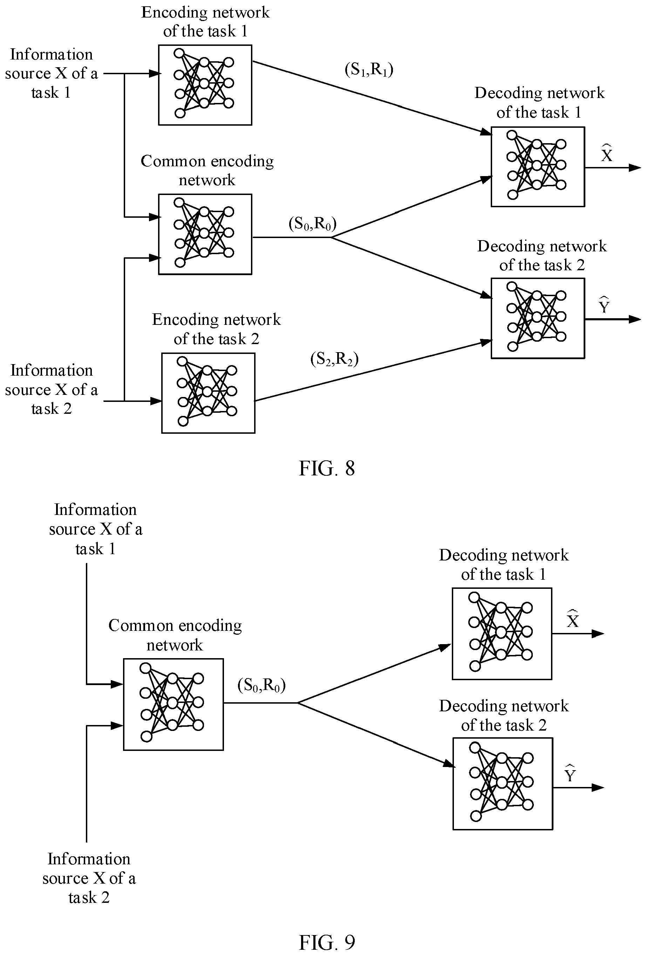

Embodiment 1: Refer to a neural network architecture shown in FIG. 8. Lossless compression is performed, and three encoders are jointly trained.

Input of the neural network: an information source X and an information source Y.

Constraint of training: $R_0 + R_1 + R_2 = H(X,Y)$, where $R_0$ is a bit rate of information obtained after the information source X and the information source Y are encoded, $R_1$ is a bit rate of information obtained after the information source X is encoded, $R_2$ is a bit rate of information obtained after the information source Y is encoded, and $H(X, Y)$ is entropy of the information source X and the information source Y The constraint may be considered as a newly designed objective function.

Objective of training: lossless reconstruction of the information source X and the information source Y.

A training process includes the following steps.

Step 1.1: Divide data of the information source X into two parts, with one part of the data used as training data and the other part of the data used as test data, and divide data of the information source Y into two parts, with one part of the data used as training data and the other part of the data used as test data.

For example, the information source X may be an information source of a task 1, and the information source Y may be an information source of a task 2.

The training data is input into the neural network. An encoder 1 (that is, an encoder for the task 1) performs characteristic extraction on the training data in the information source X, and extracts a private characteristic vector (the private characteristic vector may be used to represent private characteristic information) of the training data in the information source X. An encoder 2 (that is, an encoder for the task 2) performs characteristic extraction on the training data in the information source Y, and extracts a private characteristic vector of the training data in the information source Y An encoder 0 (that is, a common encoder) performs characteristic extraction on the training data in the information source X and the training data in the information source Y, and extracts a common characteristic vector (the common characteristic vector may be used to represent common characteristic information) of the training data in the information source X and the training data in the information source Y

In step 1.1, encoded training data output by the encoder 1 may include the private characteristic vector of the training data in the information source X, encoded training data output by the encoder 2 may include the private characteristic vector of the training data in the information source Y, and encoded training data output by the encoder 0 may include the common characteristic vector.

Step 1.2: Quantize the characteristic vectors extracted in step 1.1. For the private characteristic vector of the training data in the information source X, quantized $S_1$ is obtained. For the private characteristic vector of the training data in the information source Y, quantized $S_2$ is obtained. For the common characteristic vector of the training data in the information source X and the training data in the information source Y, quantized $S_0$ is obtained. $S_1$ and $S_0$ are transmitted to a decoder 1 through a channel, and $S_2$ and $S_0$ are transmitted to a decoder 2 through a channel.

Step 1.3: Jointly train neural network parameters (referred to as parameters for short hereinafter) of the encoders based on the constraint $R_0 + R_1 + R_2 = H(X,Y)$, to obtain a parameter $\theta_1$ of the encoder 1, a parameter $\theta_2$ of the encoder 2, and a parameter $\theta_0$ of the encoder 0.

The decoder 1 (that is, the decoder for the task 1) is trained based on received $S_1$ and $S_0$ and a distortion metric $d(x,x)$, to obtain a parameter $\varphi_1$ of the decoder 1, where X is an estimated value for the information source X obtained after the information source X is encoded and decoded by the neural network. The decoder 2 (that is, the decoder for the task 2) is trained based on received $S_2$ and $S_0$ and a distortion metric $d(Y, Y)$, to obtain a parameter $\varphi_2$ of the decoder 2, where Y is an estimated value for the information source Y obtained after the information source Y is encoded and decoded by the neural network.

In step 1.3, a process of estimating the information source may also be considered as a process of evaluating restoration of the information source. In the estimation process, the test data may be input into the neural network (with the parameters updated), and an output value of the neural network (with the parameters updated) is an estimated value for the information source.

Step 1.4: Perform training iteratively a plurality of times (or perform epoch training iteratively a plurality of times). That is, repeat step 1.1 to step 1.3 described above, and update $\theta_1$, $\theta_2$, $\theta_0$, $\varphi_1$, and $\varphi_2$ until the neural network (an encoding network and/or a decoding network) converges.

Optionally, a type of the neural network in this embodiment of this application may be related to an input information source. For example, if the information source is an image, the type of the neural network may be CNN; if the information source is a speech sequence, the type of the neural network may be RNN; and the like.

Embodiment 2: Lossless compression is performed, and three encoders are separately trained.

Input of the neural network: an information source X and an information source Y

Constraint of training: For different requirements, different constraints may be set when encoders are separately trained.

Embodiment 2.1: $R_0 = H(X,Y)$, and $R_1 = R_2 = 0$. In this case, an encoder 0 is trained, and an encoder 1 and an encoder 2 (that is, private encoders) are not trained.

Embodiment 2.2: $R_0 = 0$, $R_1 = H(X)$, and $R_2 = H(Y)$. In this case, an encoder 0 is not trained, and an encoder 1 and an encoder 2 are trained.

Embodiment 2.3: $R_0 = H(Y)$, $R_1 = H(X|Y)$, and $R_2 = 0$. In this case, an encoder 2 is not trained, and an encoder 1 and an encoder 0 are trained. $H(X|Y)$ represents entropy of the information source X when the information source Y is given, that is, entropy of the information source X when the information source Y is determined.

Embodiment 2.4: $R_0 = H(X)$, $R_1 = 0$, and $R_2 = H(Y|X)$. In this case, an encoder 1 is not trained, and an encoder 0 and an encoder 2 are trained. $H(Y|X)$ represents entropy of the information source Y when the information source X is given, that is, entropy of the information source Y when the information source X is determined.

Embodiment 2.5: $R_0 = I(X;Y)$, $R_1 = H(X|Y)$, and $R_2 = H(Y|X)$. $I(X;Y)$ represents mutual information between the information source X and the information source Y.

Objective of training: lossless reconstruction of the information source X and the information source Y.

The following describes a training process in Embodiment 2.1. A neural network architecture corresponding to Embodiment 2.1 is shown in FIG. 9.

Step 2.1.1: Divide data of the information source X into two parts, with one part of the data used as training data and the other part of the data used as test data, and divide data of the information source Y into two parts, with one part of the data used as training data and the other part of the data used as test data.

The training data in the information source X and the training data in the information source Y are input into the encoder 0. The encoder 0 performs characteristic extraction on the training data in the information source X and the training data in the information source Y, and extracts a common characteristic vector of the training data in the information source X and the training data in the information source Y.

Step 2.1.2: Quantize the common characteristic vector extracted in step 2.1.1. For the common characteristic vector of the training data in the information source X and the training data in the information source Y, quantized $S_0$ is obtained. $S_0$ is broadcast to a decoder 1 and a decoder 2.

Step 2.1.3: Perform training based on the constraint $R_0 = H(X,Y)$, to obtain a parameter $\theta_0$ of the encoder 0.

The decoder 1 is trained based on received $S_0$ and a distortion metric d(x,x), to obtain a parameter $\varphi_1$ of the decoder 1. The decoder 2 is trained based on received $S_0$ and a distortion metric $d(Y,\hat{Y})$, to obtain a parameter $\varphi_2$ of the decoder 2.

For a process of estimating the information source in step 2.1.3, refer to the process of estimating the information source in step 1.3 described above.

Step 2.1.4: Perform training iteratively a plurality of times (or perform epoch training iteratively a plurality of times). That is, repeat step 2.1.1 to step 2.1.3 described above, and update $\theta_0$, $\varphi_1$, and $\varphi_2$ until the neural network converges.

Embodiment 2.1 is equivalent to the following: for the information source X and the information source Y, using only one encoder 0 to encode the information source X and the information source Y, then broadcasting encoded data to the decoder 1 and the decoder 2, and using the decoder 1 and the decoder 2 to perform decoding processing.

The following describes a training process in Embodiment 2.2.

Step 2.2.1: Divide data of the information source X into two parts, with one part of the data used as training data and the other part of the data used as test data, and divide data of the information source Y into two parts, with one part of the data used as training data and the other part of the data used as test data.

The training data in the information source X is input into the encoder 1. The encoder 1 performs characteristic extraction on the training data in the information source X, and extracts a private characteristic vector of the training data in the information source X. The training data in the information source Y is input into the encoder 2. The encoder 2 performs characteristic extraction on the training data in the information source Y, and extracts a private characteristic vector of the training data in the information source Y.

Step 2.2.2: Quantize the characteristic vectors extracted in step 2.2.1. For the private characteristic vector of the training data in the information source X, quantized $S_1$ is obtained. For the private characteristic vector of the training data in the information source Y, quantized $S_2$ is obtained. $S_1$ is transmitted to a decoder 1 through a channel, and $S_2$ is transmitted to a decoder 2 through a channel.

Step 2.2.3: Separately train network parameters of the encoders based on the constraints $R_1 = H(X)$ and $R_2 = H(Y)$, to obtain a network parameter $\theta_1$ of the encoder 1 and a network parameter $\theta_2$ of the encoder 2.

The decoder 1 is trained based on received $S_1$ and a distortion metric d(x,x), to obtain a network parameter $\varphi_1$ of the decoder 1. The decoder 2 is trained based on received $S_2$ and a distortion metric $d(Y,\hat{Y})$, to obtain a network parameter $\varphi_2$ of the decoder 2.

For a process of estimating the information source in step 2.2.3, refer to the process of estimating the information source in step 1.3 described above.

Step 2.2.4: Perform training iteratively a plurality of times (or perform epoch training iteratively a plurality of times). That is, repeat step 2.2.1 to step 2.2.3 described above, and update $\theta_1$, $\theta_2$, $\varphi_1$, and $\varphi_2$ until the neural network converges.

Embodiment 2.2 is equivalent to the following: using the encoder 1 to encode the information source X and transmitting encoded data to the decoder 1, using the encoder 2 to encode the information source Y and transmitting encoded data to the decoder 2, and using the decoder 1 and the decoder 2 to respectively perform decoding processing.

The following describes a training process in Embodiment 2.3.

Step 2.3.1: Divide data of the information source X into two parts, with one part of the data used as training data and the other part of the data used as test data, and divide data of the information source Y into two parts, with one part of the data used as training data and the other part of the data used as test data.

The training data in the information source Y is input into the encoder 0. The encoder 0 performs characteristic extraction on the training data in the information source Y, and extracts a private characteristic vector of the training data in the information source Y The training data in the information source X existing when the information source Y is given is input into the encoder 1. The encoder 1 performs characteristic extraction on the training data in the information source X, and extracts a private characteristic vector of the training data in the information source X.

Step 2.3.2: Quantize the characteristic vectors extracted in step 2.3.1. For the private characteristic vector of the training data in the information source X, quantized $S_1$ is obtained. For the private characteristic vector of the training data in the information source Y, quantized $S_2$ is obtained. $S_1$ is transmitted to a decoder 1 through a channel, and $S_2$ is transmitted to a decoder 2 through a channel.

Step 2.3.3: Train the encoder 0 based on $R_0 =$

H(Y), to obtain a parameter $\theta_0$ of the encoder 0, and train the encoder 1 based on $R_1 = H(X|Y)$, to obtain a parameter $\theta_1$ of the encoder 1.

The decoder 1 is trained based on received $S_1$ and a distortion metric d(x,x), to obtain a parameter $\varphi_1$ of the decoder 1. The decoder 2 is trained based on received $S_2$ and a distortion metric $d(Y,\hat{Y})$, to obtain a parameter $\varphi_2$ of the decoder 2.

For a process of estimating the information source in step 2.3.3, refer to the process of estimating the information source in step 1.3 described above.

Step 2.3.4: Perform training iteratively a plurality of times (or perform epoch training iteratively a plurality of times). That is, repeat step 2.3.1 to step 2.3.3 described above, and update $\theta_0$, $\theta_1$, $\varphi_1$, and $\varphi_2$ until the neural network converges.

The following describes a training process in Embodiment 2.4.

Step 2.4.1: Divide data of the information source X into two parts, with one part of the data used as training data and the other part of the data used as test data, and divide data of the information source Y into two parts, with one part of the data used as training data and the other part of the data used as test data.

The training data in the information source X is input into the encoder 0. The encoder 0 performs characteristic extraction on the training data in the information source X, and extracts a private characteristic vector of the training data in the information source X. The training data in the information source Y existing when the information source X is given is input into the encoder 2. The encoder 2 performs characteristic extraction on the training data in the information source Y, and extracts a private characteristic vector of the training data in the information source Y.

Step 2.4.2: Refer to step 2.3.2 described above.

Step 2.4.3: Train the encoder 0 based on $R_0 = H(X)$, to obtain a parameter $\theta_0$ of the encoder 0, and train the encoder 2 based on $R_2 = H(Y|X)$, to obtain a parameter $\theta_2$ of the encoder 2.

The decoder 1 is trained based on received $S_1$ and a distortion metric d(x,x), to obtain a parameter $\varphi_1$ of the decoder 1. The decoder 2 is trained based on received $S_2$ and a distortion metric $d(Y,\hat{Y})$, to obtain a parameter $\varphi_2$ of the decoder 2.

For a process of estimating the information source in step 2.4.3, refer to the process of estimating the information source in step 1.3 described above.

Step 2.4.4: Perform training iteratively a plurality of times (or perform epoch training iteratively a plurality of times). That is, repeat step 2.4.1 to step 2.4.3 described above, and update $\theta_0$, $\theta_2$, $\varphi_1$, and $\varphi_2$ until the neural network converges.

The following describes a training process in Embodiment 2.5.

Step 2.5.1: Divide data of the information source X into two parts, with one part of the data used as training data and the other part of the data used as test data, and divide data of the information source Y into two parts, with one part of the data used as training data and the other part of the data used as test data.

The training data is input into the neural network. An encoder 1 performs characteristic extraction on the training data in the information source X, and extracts a private characteristic vector of the training data in the information source X. An encoder 2 performs characteristic extraction on the training data in the information source Y, and extracts a private characteristic vector of the training data in the information source Y. An encoder 0 performs characteristic extraction on the training data in the information source X and the training data in the information source Y, and extracts a common characteristic vector of the training data in the information source X and the training data in the information source Y

Step 2.5.2: Quantize the characteristic vectors extracted in step 2.5.1. For the private characteristic vector of the training data in the information source X, quantized $S_1$ is obtained. For the private characteristic vector of the training data in the information source Y, quantized $S_2$ is obtained. For the common characteristic vector of the training data in the information source X and the training data in the information source Y, quantized $S_0$ is obtained. $S_1$ and $S_0$ are transmitted to a decoder 1 through a channel, and $S_2$ and $S_0$ are transmitted to a decoder 2 through a channel.

Step 2.5.3: Train the encoder 0 based on $R_0 = I(X;Y)$, to obtain a parameter $\theta_0$ of the encoder 0, train the encoder 1 based on $R_1 = H(X|Y)$, to obtain a parameter $\theta_1$ of the encoder 1, and train the encoder 2 based on $R_2 = H(Y|X)$, to obtain a parameter $\theta_2$ of the encoder 2.

The decoder 1 is trained based on received $S_1$ and $S_0$ and a distortion metric d(x,x), to obtain a parameter $\varphi_1$ of the decoder 1. The decoder 2 is trained based on received $S_2$ and $S_0$ and a distortion metric d(Y, Y), to obtain a parameter $\varphi_2$ of the decoder 2.

For a process of estimating the information source in step 2.5.3, refer to the process of estimating the information source in step 1.3 described above.

Step 2.5.4: Perform training iteratively a plurality of times (or perform epoch training iteratively a plurality of times). That is, repeat step 2.5.1 to step 2.5.3 described above, and update $\theta_1$, $\theta_2$, $\theta_0$, $\varphi_1$, and $\varphi_2$ until the neural network converges.

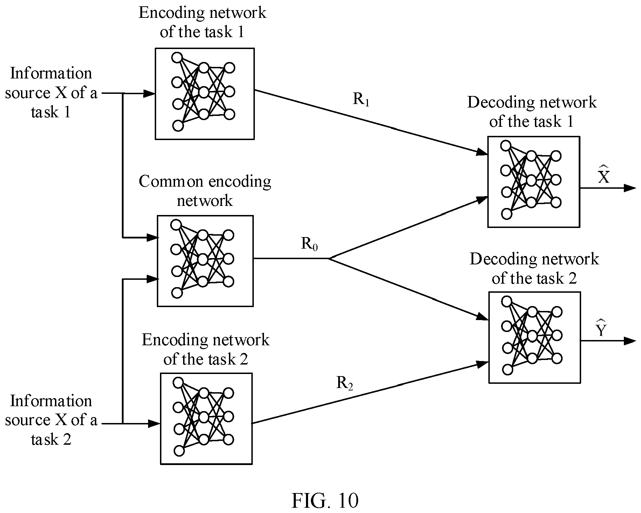

Embodiment 3: Refer to a neural network architecture shown in FIG. 10. Lossy compression is performed.

Input of the neural network: an information source X and an information source Y

Constraint of training: $R_0 + R_1 + R_2 = H(X,Y)$.

Objective of training: min $\alpha E (d_X(X,\hat{X})) + \beta E (d_Y(Y,\hat{Y}))$ or min max(E $(d_X(X,\hat{X}))$, E $(d_Y(Y,\hat{Y})))$, where $d_X(X,\hat{X})$ is a distortion metric existing when a decoder reconstructs X, that is, a restoration error of X, and $d_Y(Y, \hat{Y})$ is a distortion metric existing when a decoder reconstructs Y, that is, a restoration error of Y Parameters $\alpha$ and $\beta$ represent weighting factors and may be set in advance (for example, may be set based on priori knowledge). min $\alpha E(d_X(X,\hat{X})) + \beta E(d_Y(Y,\hat{Y}))$ can ensure a minimum sum of the distortion metric of X and the distortion metric of Y. min $\max(E(d_X(X,\hat{X})), E(dY(Y,\hat{Y})))$ can ensure that a maximum value of the distortion metric of X and the distortion metric of Y is as small as possible, so that a loss caused when data is encoded is as small as possible.

The constraint and objective may be both considered as a newly designed objective function/constraint.

A training process includes the following steps.

Step 3.1 and step 3.2: Refer to step 1.1 and step 1.2 described above.

Step 3.3: Jointly train parameters of encoders based on the constraint $R_0 + R_1 + R_2 = H(X,Y)$, to obtain a parameter $\theta_1$ of an encoder 1, a parameter $\theta_2$ of an encoder 2, and a parameter $\theta_0$ of an encoder 0.

A decoder 1 is trained based on received $S_1$ and $S_0$ and a distortion metric, to obtain a network parameter $\varphi_1$ of the decoder 1. A decoder 2 is trained based on received $S_2$ and $S_0$ and a distortion metric, to obtain a network parameter $\varphi_2$ of the decoder 2. The distortion metric may be set as min $\alpha E(d_X(X,\hat{X})) + \beta E(dY(Y,\hat{Y}))$ or min $\max(E(d_X(X,\hat{X})), E(d_Y(Y,\hat{Y})))$. In this case, the decoder 1 and the decoder 2 may be jointly trained, to obtain $\varphi_1$ and $\varphi_2$.

For a process of estimating the information source in step 3.3, refer to the process of estimating the information source in step 1.3 described above.

Step 3.4: Refer to step 1.4 described above.

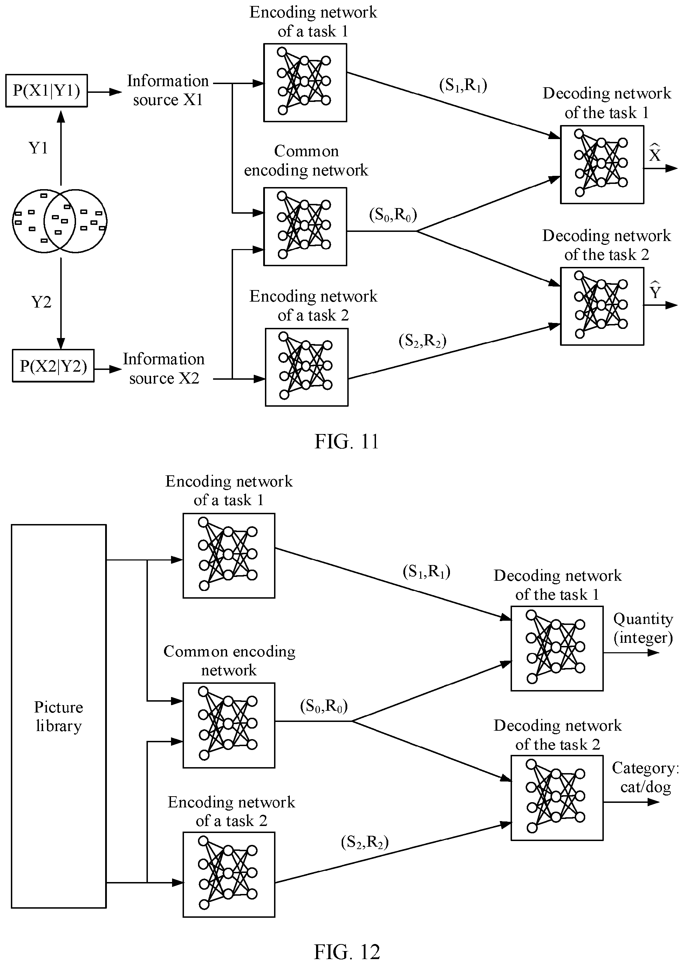

Embodiment 4: Refer to a neural network architecture shown in FIG. 11. The architecture is a task-driven multi-task encoding architecture.

Input of the neural network: an information source X. A label of an information source X1 is Y1, and a label of an information source X2 is Y2. The information source X1 and the information source X2 represent different tasks. P(X1|Y1) represents a probability of X1 when Y1 is given, and PX2|Y2 represents a probability of X2 when Y2 is given. Distribution between X1 and Y1 and distribution between X2 and Y2 are shown on a left side of FIG. 11.

Objective 1 of training: to maximize information included in the tasks, that is, to maximize I(Y1,Y2; U), where U is an output of an encoder and is a hidden variable, and U may include an encoded information source X1 (for example, extracted private characteristic information of the information source X1) and/or an encoded information source X2 (for example, extracted private characteristic information of the information source X2).

I(Y1,Y2; U) may include mutual information between Y1 and the encoded information source X1 and mutual information between Y2 and the encoded information source X2.

Objective 2 of training: to minimize transmission/storage overheads, that is, to minimize I(X1,X2; U).

I(X1, X2; U) may include mutual information between the information source X1 and the encoded information source X1 and mutual information between the information source X2 and the encoded information source X2.

In a process of designing an objective function in this embodiment, a Lagrange multiplier method may be used to link the objective 1 with the objective 2, and then a variational method may be used to make the designed objective function be applicable to training of a neural network.

Step 4.1 and step 4.2: Refer to step 1.1 and step 1.2 described above.

Step 4.3: Jointly train network parameters of the encoders based on the objective 1 and the objective 2, to obtain a network parameter $\theta_1$ of an encoder 1, a network parameter $\theta_2$ of an encoder 2, and a network parameter $\theta_0$ of an encoder 0.

For a process of estimating the information source in step 4.3, refer to the process of estimating the information source in step 1.3 described above.

Step 4.4: Refer to step 1.4 described above.

By using a neural network architecture for a cat and dog recognition training task shown in FIG. 12 as an example, the following describes Embodiment 4.

The cat and dog recognition training task includes a task 1 and a task 2. The task 1 may be a classification task, recognizing a cat and a dog marked in a picture. The task 2 may be a counting task, recording a quantity of recognized cats or dogs. The recorded quantity is usually an integer, for example, 1, 2, or 5.

Objective 1 of training: to maximize information included in the tasks, that is, to maximize I(Y1; S0, S1) and maximize I(Y2; S0, S2).

Objective 2 of training: to minimize transmission/storage overheads, that is, to minimize I(X1; S1), I(X1,X2; S0), and I(X2; S2).

In a training process, the objective 1 and the objective 2 may be combined to jointly train network parameters of encoders, to obtain a network parameter $\theta_1$ of an encoder 1, a network parameter $\theta_2$ of an encoder 2, and a network parameter $\theta_0$ of an encoder 0. When the objective 1 and the objective 2 are combined, a Lagrange multiplier method may be used for combination.

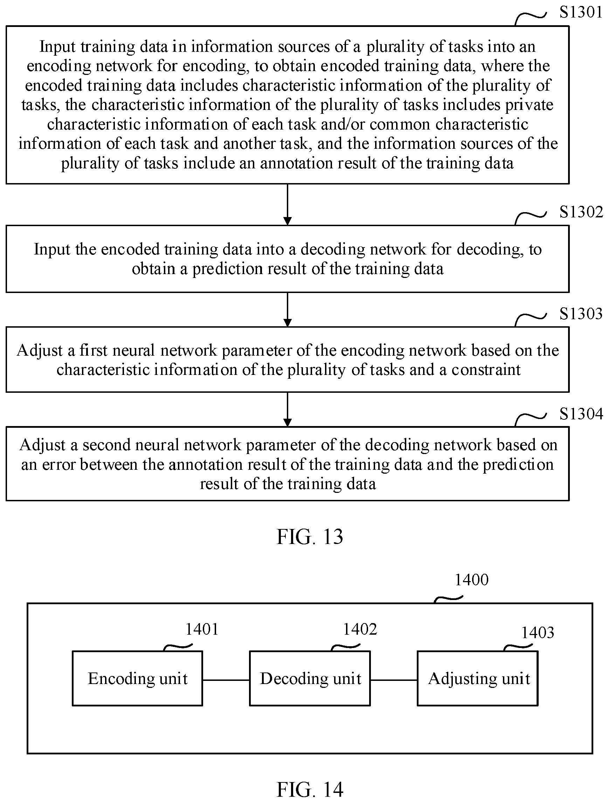

With reference to the foregoing embodiments and the accompanying drawings, as shown in FIG. 13, an embodiment of this application provides a multi-task learning method. The method includes the following steps.

S1301: Input training data in information sources of a plurality of tasks into an encoding network for encoding, to obtain encoded training data, where the encoded training data includes characteristic information of the plurality of tasks, the characteristic information of the plurality of tasks includes private characteristic information of each task and/or common characteristic information of each task and another task, and the information sources of the plurality of tasks include an annotation result of the training data.

For example, the information sources of the plurality of tasks may be the information source X and the information source Y in the foregoing embodiments.

The encoding network may include an encoding network (for example, the encoder 1 and the encoder 2) configured to extract the private characteristic information of each task, and/or an encoding network (for example, the encoder 0) configured to extract the common characteristic information of each task and another task.

S1302: Input the encoded training data into a decoding network for decoding, to obtain a prediction result of the training data.

The decoding network may include decoding networks (for example, the decoder 1 and the decoder 2) respectively corresponding to the plurality of tasks, and the decoding networks respectively corresponding to the plurality of tasks are configured to decode the encoded training data that corresponds to the information sources of the corresponding tasks. Optionally, a quantity of the decoding networks may be the same as a quantity of the tasks.

The encoding network and the decoding network may be located in a same device or different devices.

S1303: Adjust a first neural network parameter of the encoding network based on the characteristic information of the plurality of tasks and a constraint, where the constraint is a condition that the encoding network meets when reaching a convergence state.

In an example, the constraint may be used to implement lossless compression of the information sources of the plurality of tasks.

For example, the constraint may include that the encoding network with the first neural network parameter adjusted meets $R_0 + R_1 + R_2 = H(X,Y)$. For details, refer to the foregoing Embodiment 1.

$R_0$ is a bit rate of information obtained after a first encoding network with the first neural network parameter adjusted encodes an information source of a first task and an information source of a second task; $R_1$ is a bit rate of information obtained after a second encoding network with the first neural network parameter adjusted encodes the information source of the first task; $R_2$ is a bit rate of information obtained after a third encoding network with the first neural network parameter adjusted encodes the information source of the second task; $H(X,Y)$ is entropy of the information source of the first task and the information source of the second task; the first encoding network (for example, the encoder 0) is an encoding network configured to extract common characteristic information of the first task and the second task; the second encoding network (for example, the encoder 1) is an encoding network configured to extract private characteristic information of the first task; and the third encoding network (for example, the encoder 2) is an encoding network configured to extract private characteristic information of the second task.

For another example, the constraint may include at least one of the following cases:

the encoding network with the first neural network parameter adjusted may meet $R_0 = H(X,Y)$ and $R_1 = R_2 = 0$, where reference may be made to the foregoing Embodiment 2.1 for details; or
the encoding network with the first neural network parameter adjusted may meet $R_0 = 0$, $R_1 = H(X)$, and $R_2 = H(Y)$, where reference may be made to the foregoing Embodiment 2.2 for details; or
the encoding network with the first neural network parameter adjusted may meet $R_0 = H(Y)$, $R_1 = H(X|Y)$, and $R_2 = 0$, where reference may be made to the foregoing Embodiment 2.3 for details; or
the encoding network with the first neural network parameter adjusted may meet $R_0 = H(X)$, $R_1 = 0$, and $R_2 = H(Y|X)$, where reference may be made to the foregoing Embodiment 2.4 for details; or
the encoding network with the first neural network parameter adjusted may meet $R_0 = I(X;Y)$, $R_1 = H(X|Y)$, and $R_2 = H(Y|X)$, where reference may be made to the foregoing Embodiment 2.5 for details.

$H(X)$ is entropy of an information source of the first task, $H(Y)$ is entropy of an information source of the second task, $H(X|Y)$ is entropy of the information source of the first task when the information source of the second task is determined, $H(Y|X)$ is entropy of the information source of the second task when the information source of the first task is determined, and $I(X;Y)$ is mutual information between the information source of the first task and the information source of the second task.

In another example, the constraint may be used to implement lossy compression of the information sources of the plurality of tasks.

For example, the constraint may include that the encoding network with the first neural network parameter adjusted meets $R_0 + R_1 + R_2 = H(X,Y)$, and a distortion metric of a second encoding network with the first neural network parameter adjusted and a distortion metric of a third encoding network with the first neural network parameter adjusted reach a minimum distortion metric value. For details, refer to the foregoing Embodiment 3.

The minimum distortion metric value is a distortion metric value obtained when the second encoding network with the first neural network parameter adjusted and the third encoding network with the first neural network parameter adjusted reach a convergence state.

The minimum distortion metric value may be expressed as $\min \alpha E\left(d_X(X,\hat{X})\right) + \beta E\left(d_Y(Y,\hat{Y})\right)$ or min

$$\max\left( E\left(d_X\left(X,\hat{X}\right)\right), E\left(d_Y\left(Y,\hat{Y}\right)\right)\right).$$

In still another example, the constraint may include: the decoding network with a neural network parameter adjusted meets that I(Y1, Y2; U) reaches a maximum value, that is, maximizing I(Y1, Y2; U), and/or the encoding network with a neural network parameter adjusted meets that I(X1,X2; U) reaches a minimum value, that is, minimizing I(X1,X2; U). For details, refer to the foregoing Embodiment 4.

Y1 is an annotation result of training data in an information source of a first task, and Y2 is an annotation result of training data in an information source of a second task; U is encoded training data, and the encoded training data includes private characteristic information of the first task, private characteristic information of the second task, and common characteristic information of the first task and the second task; I represents a value of mutual information; the maximum value is a value of mutual information between the annotation result of the training data in the information sources of the plurality of tasks and the encoded training data obtained when the encoding network with the first neural network parameter adjusted reaches a convergence state, and the value of the mutual information is expressed based on I; X1 is the training data in the information source of the first task, and X2 is the training data in the information source of the second task; and the minimum value is a value of mutual information between the training data in the information sources of the plurality of tasks and the encoded training data obtained when the encoding network with the first neural network parameter adjusted reaches a convergence state.

S1304: Adjust a second neural network parameter of the decoding network based on an error between the annotation result of the training data and the prediction result of the training data.

An order in which S1303 and S1304 are performed is not limited.

It may be understood that the foregoing steps may be repeated a plurality of times, that is, training is performed a plurality of times by using the data in the information sources of the plurality of tasks until a neural network converges.

For specific implementations shown in FIG. 13 in this embodiment of this application, refer to descriptions of the foregoing relevant embodiments.

The embodiments in this embodiment of this application may be used in combination with each other, or may be used individually.

In FIG. 13, the solutions provided in this application are mainly described from a perspective of a procedure of the method. It may be understood that to implement the foregoing functions, an apparatus may include corresponding hardware structures and/or software modules that perform the functions. A person skilled in the art should be easily aware that units, algorithms, and steps in the examples described with reference to the embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

When integrated units are used, FIG. 14 is a possible example block diagram of a multi-task learning apparatus according to an embodiment of this application. The image processing model training apparatus 1400 may exist in a form of software. The image processing model training apparatus 1400 may include an encoding unit 1401, a decoding unit 1402, and an adjusting unit 1403.

The multi-task learning apparatus 1400 may be the foregoing network device or terminal device, or may be a semiconductor chip disposed in the network device or terminal device. Specifically, in an embodiment, the encoding unit 1401 is configured to input training data in information sources of a plurality of tasks into an encoding network for encoding, to obtain encoded training data, where the encoded training data includes characteristic information of the plurality of tasks, the characteristic information of the plurality of tasks includes private characteristic information of each task and/or common characteristic information of each task and another task, and the information sources of the plurality of tasks include an annotation result of the training data.

The decoding unit 1402 is configured to input the encoded training data into a decoding network for decoding, to obtain a prediction result of the training data.

The adjusting unit 1403 is configured to: adjust a first neural network parameter of the encoding network based on the characteristic information of the plurality of tasks and a constraint, where the constraint is a condition that the encoding network meets when reaching a convergence state; and adjust a second neural network parameter of the decoding network based on an error between the annotation result of the training data and the prediction result of the training data.

In a possible design, the encoding network includes an encoding network configured to extract the private characteristic information of each task, and/or an encoding network configured to extract the common characteristic information of each task and another task.

The decoding network includes decoding networks respectively corresponding to the plurality of tasks, and the decoding networks respectively corresponding to the plurality of tasks are configured to decode the encoded training data that corresponds to the information sources of the corresponding tasks.

In a possible design, the constraint is used to implement lossless compression of the information sources of the plurality of tasks.

In a possible design, the constraint includes that the encoding network with the first neural network parameter adjusted meets $R_0 + R_1 + R_2 = H(X,Y)$.

$R_0$ is a bit rate of information obtained after a first encoding network with the first neural network parameter adjusted encodes an information source of a first task and an information source of a second task; $R_1$ is a bit rate of information obtained after a second encoding network with the first neural network parameter adjusted encodes the information source of the first task; $R_2$ is a bit rate of information obtained after a third encoding network with the first neural network parameter adjusted encodes the information source of the second task; H(X,Y) is entropy of the information source of the first task and the information source of the second task; the first encoding network is an encoding network configured to extract common characteristic information of the first task and the second task; the second encoding network is an encoding network configured to extract private characteristic information of the first task; and the third encoding network is an encoding network configured to extract private characteristic information of the second task.

In a possible design, the constraint includes at least one of the following cases:

the encoding network with the first neural network parameter adjusted meets $R_0 = H(X,Y)$ and $R_1 = R_2 = 0$; or
the encoding network with the first neural network parameter adjusted meets $R_0 = 0$, $R_1 = H(X)$, and $R_2 = H(Y)$; or
the encoding network with the first neural network parameter adjusted meets $R_0 = H(Y)$, $R_1 = H(X|Y)$, and $R_2 = 0$; or
the encoding network with the first neural network parameter adjusted meets $R_0 = H(X)$, $R_1 = 0$, and $R_2 = H(Y|X)$; or
the encoding network with the first neural network parameter adjusted meets $R_0 = I(X;Y)$, $R_1 = H(X|Y)$, and $R_2 = H(Y|X)$.

$R_0$ is a bit rate of information obtained after a first encoding network with the first neural network parameter adjusted encodes an information source of a first task and an information source of a second task; $R_1$ is a bit rate of information obtained after a second encoding network with the first neural network parameter adjusted encodes the information source of the first task; $R_2$ is a bit rate of information obtained after a third encoding network with the first neural network parameter adjusted encodes the information source of the second task; H(X,Y) is entropy of the information source of the first task and the information source of the second task; H(X) is entropy of the information source of the first task, and H(Y) is entropy of the information source of the second task; H(X|Y) is entropy of the information source of the first task when the information source of the second task is determined; H(Y|X) is entropy of the information source of the second task when the information source of the first task is determined; and I(X;Y) is mutual information between the information source of the first task and the information source of the second task, and a value of the mutual information is expressed based on I.

The first encoding network is an encoding network configured to extract common characteristic information of the first task and the second task, the second encoding network is an encoding network configured to extract private characteristic information of the first task, and the third encoding network is an encoding network configured to extract private characteristic information of the second task.

In a possible design, the constraint is used to implement lossy compression of the information sources of the plurality of tasks.

In a possible design, the constraint includes that the encoding network with the first neural network parameter adjusted meets $R_0 + R_1 + R_2 = H(X,Y)$, and a distortion metric of a second encoding network with the first neural network parameter adjusted and a distortion metric of a third encoding network with the first neural network parameter adjusted reach a minimum distortion metric value.

The minimum distortion metric value is a distortion metric value obtained when the second encoding network with the first neural network parameter adjusted and the third encoding network with the first neural network parameter adjusted reach a convergence state; $R_0$ is a bit rate of information obtained after a first encoding network with the first neural network parameter adjusted encodes an information source of a first task and an information source of a second task; $R_1$ is a bit rate of information obtained after the first encoding network with the first neural network parameter adjusted encodes the information source of the first task; $R_2$ is a bit rate of information obtained after the second encoding network with the first neural network parameter adjusted encodes the information source of the second task; H (X, Y) is entropy of the information source of the first task and the information source of the second task; and the first encoding network is an encoding network configured to extract common characteristic information of the first task and the second task, the second encoding network is an encoding network configured to extract private characteristic information of the first task, and the third encoding network is an encoding network configured to extract private characteristic information of the second task.

In a possible design, the constraint further includes: the decoding network with a neural network parameter adjusted meets that I(Y1,Y2; U) reaches a maximum value, and/or the encoding network with a neural network parameter adjusted meets that I(X1, X2; U) reaches a minimum value.

Y1 is an annotation result of training data in an information source of a first task, and Y2 is an annotation result of training data in an information source of a second task; U is encoded training data, and the encoded training data includes private characteristic information of the first task, private characteristic information of the second task, and common characteristic information of the first task and the second task; the maximum value is a value of mutual information between the annotation result of the training data in the information sources of the plurality of tasks and the encoded training data obtained when the encoding network with the first neural network parameter adjusted reaches a convergence state, and the value of the mutual information is expressed based on I; X1 is the training data in the information source of the first task, and X2 is the training data in the information source of the second task; and the minimum value is a value of mutual information between the training data in the information sources of the plurality of tasks and the encoded training data obtained when the encoding network with the first neural network parameter adjusted reaches a convergence state.

In this embodiment of this application, division into the units is an example, and is merely a logical function division. In actual implementation, another division manner may be used. In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the current technology, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

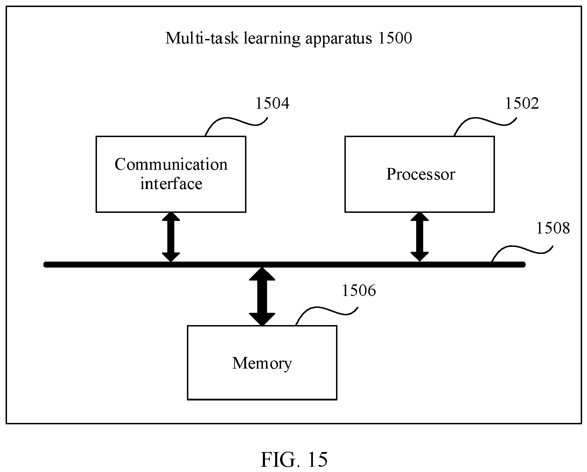

As shown in FIG. 15, an embodiment of this application further provides a schematic diagram of another possible structure of a multi-task learning apparatus. The multi-task learning apparatus includes at least one processor 1502 and at least one communication interface 1504. Further, the multi-task learning apparatus may further include a memory 1506. The memory 1506 is configured to store a computer program or instructions. The memory 1506 may be a memory inside a processor or a memory outside a processor. When the units and modules described in FIG. 14 are implemented by software, software or program code required for the processor 1502 to perform a corresponding action is stored in the memory 1506. The processor 1502 is configured to execute the program or instructions in the memory 1506, to implement the steps shown in FIG. 13 in the foregoing embodiment. The communication interface 1504 is configured to implement communication between the apparatus and another apparatus.

When the memory 1506 is disposed outside a processor, the memory 1506, the processor 1502, and the communication interface 1504 are connected to each other by using a bus 1508. The bus 1508 may be a peripheral component interconnect (peripheral component interconnect, PCI) bus, an extended industry standard architecture (extended industry standard architecture, EISA) bus, or the like. It should be understood that the bus may include an address bus, a data bus, a control bus, and the like. For ease of representation, only one bold line is used for representation in FIG. 15, but this does not mean that there is only one bus or only one type of bus.

It should be noted that operations and/or functions of modules in the apparatus 1500 are respectively used to implement corresponding procedures of the method shown in FIG. 13. For brevity, details are not described herein again.

An embodiment of this application further provides a chip system, including a processor. The processor is coupled to a memory. The memory is configured to store a program or instructions. When the program or instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field-programmable gate array (field programmable gate array, FPGA), an application-specific integrated chip (application specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable controller (programmable logic device, PLD) or another integrated chip.

It should be understood that the steps in the foregoing method embodiments may be completed by an integrated logic circuit in a form of hardware or instructions in a form of software in the processor. The steps of the method disclosed with reference to embodiments of this application may be directly performed by a hardware processor, or may be performed by a combination of hardware and software modules in the processor.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

It should be understood that, the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, discrete gate or transistor logic device, or discrete hardware component, the memory (a storage module) is integrated into the processor.

It should be noted that the memory described in this specification is intended to include but not limited to these memories and any memory of another appropriate type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A multi-task learning method, comprising:

   inputting training data in information sources of a plurality of tasks into an encoding network for encoding, to obtain encoded training data, wherein the encoded training data comprises characteristic information of the plurality of tasks, the characteristic information of the plurality of tasks comprises private characteristic information of each task and/or common characteristic information of each task and another task, and the information sources of the plurality of tasks comprise an annotation result of the training data;

   inputting the encoded training data into a decoding network for decoding, to obtain a prediction result of the training data;

   adjusting a first neural network parameter of the encoding network based on the characteristic information of the plurality of tasks and a constraint, wherein the constraint is a condition that the encoding network meets when reaching a convergence state; and

   adjusting a second neural network parameter of the decoding network based on an error between the annotation result of the training data and the prediction result of the training data.

2. The method according to claim 1, wherein the encoding network comprises an encoding network configured to extract the private characteristic information of each task, and/or an encoding network configured to extract the common characteristic information of each task and another task.

3. The method according to claim 1 or 2, wherein the decoding network comprises decoding networks respectively corresponding to the plurality of tasks, and the decoding networks respectively corresponding to the plurality of tasks are configured to decode the encoded training data that corresponds to the information sources of the corresponding tasks.

4. The method according to any one of claims 1 to 3, wherein the constraint is used to implement lossless compression of the information sources of the plurality of tasks.

5. The method according to claim 4, wherein the constraint comprises that the encoding network with the first neural network parameter adjusted meets $R_0 + R_1 + R_2 = H(X, Y)$, wherein

   $R_0$ is a bit rate of information obtained after a first encoding network with the first neural network parameter adjusted encodes an information source of a first task and an information source of a second task;
   $R_1$ is a bit rate of information obtained after a second encoding network with the first neural network parameter adjusted encodes the information source of the first task;
   $R_2$ is a bit rate of information obtained after a third encoding network with the first neural network parameter adjusted encodes the information source of the second task;
   $H(X,Y)$ is entropy of the information source of the first task and the information source of the second task; and
   the first encoding network is an encoding network configured to extract common characteristic information of the first task and the second task; the second encoding network is an encoding network configured to extract private characteristic information of the first task; and the third encoding network is an encoding network configured to extract private characteristic information of the second task.

6. The method according to claim 4, wherein the constraint comprises at least one of the following cases:

the encoding network with the first neural network parameter adjusted meets $R_0 = H(X,Y)$ and $R_1 = R_2 = 0$; or
the encoding network with the first neural network parameter adjusted meets $R_0 = 0$, $R_1 = H(X)$, and $R_2 = H(Y)$; or
the encoding network with the first neural network parameter adjusted meets $R_0 = H(Y)$, $R_1 = H(X|Y)$, and $R_2 = 0$; or
the encoding network with the first neural network parameter adjusted meets $R_0 = H(X)$, $R_1 = 0$, and $R_2 = H(Y|X)$; or
the encoding network with the first neural network parameter adjusted meets $R_0 = I(X;Y)$, $R_1 = H(X|Y)$, and $R_2 = H(Y|X)$, wherein
$R_0$ is a bit rate of information obtained after a first encoding network with the first neural network parameter adjusted encodes an information source of a first task and an information source of a second task;
$R_1$ is a bit rate of information obtained after a second encoding network with the first neural network parameter adjusted encodes the information source of the first task;
$R_2$ is a bit rate of information obtained after a third encoding network with the first neural network parameter adjusted encodes the information source of the second task;
$H(X,Y)$ is entropy of the information source of the first task and the information source of the second task;
$H(X)$ is entropy of the information source of the first task, and $H(Y)$ is entropy of the information source of the second task;
$H(X|Y)$ is entropy of the information source of the first task when the information source of the second task is determined;
$H(Y|X)$ is entropy of the information source of the second task when the information source of the first task is determined;
$I(X;Y)$ is mutual information between the information source of the first task and the information source of the second task; and
the first encoding network is an encoding network configured to extract common characteristic information of the first task and the second task, the second encoding network is an encoding network configured to extract private characteristic information of the first task, and the third encoding network is an encoding network configured to extract private characteristic information of the second task.

7. The method according to any one of claims 1 to 3, wherein the constraint is used to implement lossy compression of the information sources of the plurality of tasks.

8. The method according to claim 7, wherein the constraint comprises that the encoding network with the first neural network parameter adjusted meets $R_0 + R_1 + R_2 = H(X,Y)$, and a distortion metric of a second encoding network with the first neural network parameter adjusted and a distortion metric of a third encoding network with the first neural network parameter adjusted reach a minimum distortion metric value, wherein

the minimum distortion metric value is a distortion metric value obtained when the second encoding network with the first neural network parameter adjusted and the third encoding network with the first neural network parameter adjusted reach a convergence state;
$R_0$ is a bit rate of information obtained after a first encoding network with the first neural network parameter adjusted encodes an information source of a first task and an information source of a second task;
$R_1$ is a bit rate of information obtained after the first encoding network with the first neural network parameter adjusted encodes the information source of the first task;
$R_2$ is a bit rate of information obtained after the second encoding network with the first neural network parameter adjusted encodes the information source of the second task;
$H(X,Y)$ is entropy of the information source of the first task and the information source of the second task; and
the first encoding network is an encoding network configured to extract common characteristic information of the first task and the second task; the second encoding network is an encoding network configured to extract private characteristic information of the first task; and the third encoding network is an encoding network configured to extract private characteristic information of the second task.

9. The method according to any one of claims 1 to 3, wherein the constraint comprises: the decoding network with a neural network parameter adjusted meets that $I(Y1,Y2; U)$ reaches a maximum value, and/or the encoding network with a neural network parameter adjusted meets that $I(X1,X2; U)$ reaches a minimum value, wherein

Y1 is an annotation result of training data in an information source of a first task, and Y2 is an annotation result of training data in an information source of a second task;
U is encoded training data, and the encoded training data comprises private characteristic information of the first task, private characteristic information of the second task, and common characteristic information of the first task and the second task;

the maximum value is a value of mutual information between the annotation result of the training data in the information sources of the plurality of tasks and the encoded training data obtained when the encoding network with the first neural network parameter adjusted reaches a convergence state, and the value of the mutual information is expressed based on I;

X1 is the training data in the information source of the first task, and X2 is the training data in the information source of the second task; and

the minimum value is a value of mutual information between the training data in the information sources of the plurality of tasks and the encoded training data obtained when the encoding network with the first neural network parameter adjusted reaches a convergence state.

10. A multi-task learning apparatus, comprising:

an encoding unit, configured to input training data in information sources of a plurality of tasks into an encoding network for encoding, to obtain encoded training data, wherein the encoded training data comprises characteristic information of the plurality of tasks, the characteristic information of the plurality of tasks comprises private characteristic information of each task and/or common characteristic information of each task and another task, and the information sources of the plurality of tasks comprise an annotation result of the training data;

a decoding unit, configured to input the encoded training data into a decoding network for decoding, to obtain a prediction result of the training data; and

an adjustment unit, configured to: adjust a first neural network parameter of the encoding network based on the characteristic information of the plurality of tasks and a constraint, wherein the constraint is a condition that the encoding network meets when reaching a convergence state; and adjust a second neural network parameter of the decoding network based on an error between the annotation result of the training data and the prediction result of the training data.

11. The apparatus according to claim 10, wherein the encoding network comprises an encoding network configured to extract the private characteristic information of each task, and/or an encoding network configured to extract the common characteristic information of each task and another task.

12. The apparatus according to claim 10 or 11, wherein the decoding network comprises decoding networks respectively corresponding to the plurality of tasks, and the decoding networks respectively corresponding to the plurality of tasks are configured to decode the encoded training data that corresponds to the information sources of the corresponding tasks.

13. The apparatus according to any one of claims 10 to 12, wherein the constraint is used to implement lossless compression of the information sources of the plurality of tasks.

14. The apparatus according to claim 13, wherein the constraint comprises that the encoding network with the first neural network parameter adjusted meets $R_0 + R_1 + R_2 = H(X, Y)$, wherein

$R_0$ is a bit rate of information obtained after a first encoding network with the first neural network parameter adjusted encodes an information source of a first task and an information source of a second task;

$R_1$ is a bit rate of information obtained after a second encoding network with the first neural network parameter adjusted encodes the information source of the first task;

$R_2$ is a bit rate of information obtained after a third encoding network with the first neural network parameter adjusted encodes the information source of the second task;

$H(X,Y)$ is entropy of the information source of the first task and the information source of the second task; and

the first encoding network is an encoding network configured to extract common characteristic information of the first task and the second task; the second encoding network is an encoding network configured to extract private characteristic information of the first task; and the third encoding network is an encoding network configured to extract private characteristic information of the second task.

15. The apparatus according to claim 13, wherein the constraint comprises at least one of the following cases:

the encoding network with the first neural network parameter adjusted meets $R_0 = H(X,Y)$ and $R_1 = R_2 = 0$; or

the encoding network with the first neural network parameter adjusted meets $R_0 = 0$, $R_1 = H(X)$, and $R_2 = H(Y)$; or

the encoding network with the first neural network parameter adjusted meets $R_0 = H(Y)$, $R_1 = H(X|Y)$, and $R_2 = 0$; or

the encoding network with the first neural net-

work parameter adjusted meets $R_0 = H(X)$, $R_1 = 0$, and $R_2 = H(Y|X)$; or

the encoding network with the first neural network parameter adjusted meets $R_0 = I(X;Y)$, $R_1 = H(X|Y)$, and $R_2 = H(Y|X)$, wherein

$R_0$ is a bit rate of information obtained after a first encoding network with the first neural network parameter adjusted encodes an information source of a first task and an information source of a second task;

$R_1$ is a bit rate of information obtained after a second encoding network with the first neural network parameter adjusted encodes the information source of the first task;

$R_2$ is a bit rate of information obtained after a third encoding network with the first neural network parameter adjusted encodes the information source of the second task;

$H(X,Y)$ is entropy of the information source of the first task and the information source of the second task; and

$H(X)$ is entropy of the information source of the first task, and $H(Y)$ is entropy of the information source of the second task;

$H(X|Y)$ is entropy of the information source of the first task when the information source of the second task is determined;

$H(Y|X)$ is entropy of the information source of the second task when the information source of the first task is determined;

$I(X;Y)$ is mutual information between the information source of the first task and the information source of the second task; and

the first encoding network is an encoding network configured to extract common characteristic information of the first task and the second task, the second encoding network is an encoding network configured to extract private characteristic information of the first task, and the third encoding network is an encoding network configured to extract private characteristic information of the second task.

16. The apparatus according to any one of claims 10 to 12, wherein the constraint is used to implement lossy compression of the information sources of the plurality of tasks.

17. The apparatus according to claim 16, wherein the constraint comprises that the encoding network with the first neural network parameter adjusted meets $R_0 + R_1 + R_2 = H(X, Y)$, and a distortion metric of a second encoding network with the first neural network parameter adjusted and a distortion metric of a third encoding network with the first neural network parameter adjusted reach a minimum distortion metric value, wherein

the minimum distortion metric value is a distortion metric value obtained when the second encoding network with the first neural network parameter adjusted and the third encoding network with the first neural network parameter adjusted reach a convergence state;

$R_0$ is a bit rate of information obtained after a first encoding network with the first neural network parameter adjusted encodes an information source of a first task and an information source of a second task;

$R_1$ is a bit rate of information obtained after the first encoding network with the first neural network parameter adjusted encodes the information source of the first task;

$R_2$ is a bit rate of information obtained after the second encoding network with the first neural network parameter adjusted encodes the information source of the second task;

$H(X, Y)$ is entropy of the information source of the first task and the information source of the second task; and

the first encoding network is an encoding network configured to extract common characteristic information of the first task and the second task; the second encoding network is an encoding network configured to extract private characteristic information of the first task; and the third encoding network is an encoding network configured to extract private characteristic information of the second task.

18. The apparatus according to any one of claims 10 to 12, wherein the decoding network with a neural network parameter adjusted meets that $I(Y1,Y2; U)$ reaches a maximum value, and/or the encoding network with a neural network parameter adjusted meets that $I(X1,X2; U)$ reaches a minimum value, wherein

Y1 is an annotation result of training data in an information source of a first task, and Y2 is an annotation result of training data in an information source of a second task;

U is encoded training data, and the encoded training data comprises private characteristic information of the first task, private characteristic information of the second task, and common characteristic information of the first task and the second task;

the maximum value is a value of mutual information between the annotation result of the training data in the information sources of the plurality of tasks and the encoded training data obtained when the encoding network with the first neural network parameter adjusted reaches a convergence state, and the value of the mutual information is expressed based on I;

X1 is the training data in the information source of the first task, and X2 is the training data in the information source of the second task; and
the minimum value is a value of mutual information between the training data in the information sources of the plurality of tasks and the encoded training data obtained when the encoding network with the first neural network parameter adjusted reaches a convergence state.

19. A multi-task learning apparatus, wherein the apparatus comprises at least one processor, and the at least one processor is coupled to at least one memory; and
the at least one processor is configured to execute a computer program or instructions stored in the at least one memory, to enable the apparatus to perform the method according to any one of claims 1 to 9.

20. A readable storage medium, wherein computer program instructions are stored, and when the instructions are executed, the method according to any one of claims 1 to 9 is implemented.

21. A multi-task learning apparatus, comprising a processor and an interface circuit, wherein

the interface circuit is configured to: receive code instructions and transmit the code instructions to the processor; and
the processor is configured to run the code instructions to perform the method according to any one of claims 1 to 9.

FIG. 1

FIG. 2

Next-layer parameter

$\dfrac{\partial L}{\partial si}$

$\dfrac{\partial L}{\partial wij}$

Previous-layer parameter

wij

i

j

FIG. 3

(X, Y) → Encoder
encoder

R₁ → Decoder
decoder 1 → X

R₀

R₂ → Decoder
decoder 2 → Y

FIG. 4

Base station

Terminal
device

Terminal
device

FIG. 5

| Encoder | → | Channel/Storage medium | → | Decoder |

FIG. 6

Encoding network
of the task 1

Information
source X of a
task 1

$R_1$

Common encoding
network

$R_0$

Encoding network
of the task 2

$R_2$

Decoding network
of the task 1

$\widehat{X}$

Decoding network
of the task 2

$\widehat{Y}$

Information
source X of a
task 2

FIG. 7

FIG. 8

FIG. 9

Encoding network
of the task 1

Information
source X of a
task 1

$R_1$

Decoding network
of the task 1

$\widehat{X}$

Common encoding
network

$R_0$

Encoding network
of the task 2

Information
source X of a
task 2

$R_2$

Decoding network
of the task 2

$\widehat{Y}$

FIG. 10

FIG. 11

FIG. 12

S1301

Input training data in information sources of a plurality of tasks into an encoding network for encoding, to obtain encoded training data, where the encoded training data includes characteristic information of the plurality of tasks, the characteristic information of the plurality of tasks includes private characteristic information of each task and/or common characteristic information of each task and another task, and the information sources of the plurality of tasks include an annotation result of the training data

S1302

Input the encoded training data into a decoding network for decoding, to obtain a prediction result of the training data

S1303

Adjust a first neural network parameter of the encoding network based on the characteristic information of the plurality of tasks and a constraint

S1304

Adjust a second neural network parameter of the decoding network based on an error between the annotation result of the training data and the prediction result of the training data

FIG. 13

1400

1401

1402

1403

| Encoding unit | Decoding unit | Adjusting unit |

FIG. 14

Multi-task learning apparatus 1500

1504

1502

Communication interface

Processor

1508

1506

Memory

FIG. 15

## INTERNATIONAL SEARCH REPORT

| International application No. |
| --- |
| **PCT/CN2021/101723** |

| A. | CLASSIFICATION OF SUBJECT MATTER |
| --- | --- |

G06N 3/04(2006.01)i

According to International Patent Classification (IPC) or to both national classification and IPC

| B. | FIELDS SEARCHED |
| --- | --- |

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT; CNKI; WPI; EPODOC: 多任务, 学习, 信源, 训练, 编码, 特征, 标注, 解码, 神经网络, 约束, 误差, multitask, MLT, learning, information source, training, encoding, characteristic, label, decoding, neural network, constraint, error

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 110097528 A (JIANGNAN UNIVERSITY) 06 August 2019 (2019-08-06) description, paragraphs [0009]-[0046] | 1-21 |
| A | CN 110574049 A (GOOGLE INC.) 13 December 2019 (2019-12-13) entire document | 1-21 |
| A | CN 111247532 A (INTERNATIONAL BUSINESS MACHINES CORPORATION) 05 June 2020 (2020-06-05) entire document | 1-21 |
| A | CN 105404877 A (SENSETIME GROUP CO., LTD.) 16 March 2016 (2016-03-16) entire document | 1-21 |
| A | US 2019244108 A1 (COGNIZANT TECHNOLOGY SOLUTIONS U.S. CORPORATION) 08 August 2019 (2019-08-08) entire document | 1-21 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 September 2021** | **24 September 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/101723**

| Patent document cited in search report | | | Publication date (day/month/year) | Patent family member(s) | | | Publication date (day/month/year) |
|---|---|---|---|---|---|---|---|
| CN | 110097528 | A | 06 August 2019 | None | | | |
| CN | 110574049 | A | 13 December 2019 | US | 2020089755 | A1 | 19 March 2020 |
| | | | | EP | 3596666 | A1 | 22 January 2020 |
| | | | | WO | 2018213841 | A1 | 22 November 2018 |
| | | | | US | 2020364405 | A1 | 19 November 2020 |
| CN | 111247532 | A | 05 June 2020 | US | 2019156211 | A1 | 23 May 2019 |
| | | | | GB | 202008897 | D0 | 29 July 2020 |
| | | | | WO | 2019100784 | A1 | 31 May 2019 |
| | | | | DE | 112018005227 | T5 | 02 July 2020 |
| | | | | GB | 2580855 | A | 29 July 2020 |
| | | | | JP | 2021503668 | A | 12 February 2021 |
| CN | 105404877 | A | 16 March 2016 | None | | | |
| US | 2019244108 | A1 | 08 August 2019 | WO | 2019157257 | A1 | 15 August 2019 |

Form PCT/ISA/210 (patent family annex) (January 2015)

**EP 4 156 028 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010588363